# EUROPEAN PATENT SPECIFICATION

(11) **EP 3 190 035 B1**
(45) Date of publication and mention of the grant of the patent: **06.06.2018**
(21) Application number: 16200073.1
(22) Date of filing: 22.11.2016
(51) Int. Cl.: B62J 35/00, B62K 11/10, B62K 19/46

(54) **STRADDLED VEHICLE**
GRÄTSCHSITZFAHRZEUG
VÉHICULE À CHEVAUCHER

(30) Priority: 06.01.2016 JP 2016001210
(43) Date of publication of application: 12.07.2017
(73) Proprietor: Yamaha Hatsudoki Kabushiki Kaisha, Iwata-shi, Shizuoka 438-8501 (JP)
(72) Inventor: KIKUCHI, Hiroshi, Iwata-shi, Shizuoka 438-8501 (JP); SAITO, Yusuke, Iwata-shi, Shizuoka 438-8501 (JP)
(74) Representative: Grünecker Patent- und Rechtsanwälte PartG mbB

(56) References cited:
- EP-A1- 2 457 815
- JP-A- H0 321 577
- JP-A- 2010 105 641
- US-A- 5 433 286
- US-B1- 6 397 964

## Description

The present invention relates to a straddled vehicle.

A vehicle body frame (7) of a motorcycle described in Japan Laid-open Patent Application Publication No. H02-88382 includes a head pipe (7a), a down tube (7b) and a pair of right and left lower frames (7c, 7c). The down tube (7b) downwardly extends from the head pipe (7a). The lower frames (7c, 7c) extend rearward and outward in a vehicle width direction from a lower portion of the down tube (7b).

Additionally, the vehicle body frame (7) includes a pair of right and left center frames (7d, 7d) and a pair of right and left rear frames (7e, 7e). The center frames (7d, 7d) respectively extend upward and the rearward from the tower frames (7c, 7c). The rear frames (7e, 7e) respectively extend rearward from the center frames (7d, 7d).

Additionally, the motorcycle described in Japan Laid-open Patent Application Publication No. H02-88382 includes a seat (6) on which a rider is seated and a storage box (21). The storage box (21) is disposed under the seat (6), and is supported by the vehicle body frame (7). A front portion of the storage box (21) is supported by a sub-frame (7i). When seated on the seat (6), the rider puts his/her feet on a pair of right and left steps (9a, 9a) extending in a vehicle back-and-forth direction.

A tunnel portion (cover 9) is disposed between the right step (9a) and the left step (9a) in the vehicle width direction. The tunnel portion (9) is made in an upwardly protruding shape. The tunnel portion (9) is disposed in a lower position than the seat (6). With the tunnel portion (9) disposed in a low position, the rider easily straddles the tunnel portion (9) with his/her legs. Therefore, the rider can easily ride on/off the motorcycle.

A fuel tank (4) is disposed in the tunnel portion (9). Specifically, the fuel tank (4) is disposed in the internal space of the tunnel portion (9). The dimension of the fuel tank (4) is greater in the vehicle width direction than in a vehicle up-and-down direction. In other words, the fuel tank (4) is made in a wide shape.

A front portion of the fuel tank (4) is fixed to the right and left lower frames (7c, 7c) by tank fixing metal brackets (8, 8). A rear portion of the fuel tank (4) is fixed to the right and left lower frames (7c, 7c) by the other tank fixing metal brackets (8, 8). The fuel tank (4) is firmly supported while being attached to the right and left lower frames (7c, 7c) disposed at a wide interval in the vehicle width direction. An engine unit (5) is disposed rearward of the fuel tank (4) and under the storage box (21). In a vehicle front view, the fuel tank (4) and a cylinder head cover overlaps with each other.

In the motorcycle described in Japan Laid-open Patent Application Publication No. H02-88382, the tunnel portion (9), in which the fuel tank (4) is disposed, is disposed between the right and left steps (9a, 9a). Therefore, each of the right and left steps (9a, 9a) is inevitably designed to have a relatively small dimension in the vehicle width direction. When each of the right and left steps (9a, 9a) has a small dimension in the vehicle width direction, the rider has difficulty in putting his/her feet thereon. This poses a drawback of deterioration in comfortableness of the rider.

Additionally, the engine is disposed immediately rearward of the fuel tank (4). The engine includes a cylinder and the cylinder head cover separately provided from the cylinder. In performing a maintenance work, the cylinder head cover is detached from the cylinder. However, the fuel tank becomes an obstacle and makes it difficult to detach the cylinder head cover. This poses a drawback of deterioration in maintenance performance. A straddled vehicle according to the preamble of claim 1 is disclosed by US 5,433,286 A, which derives from JP H02-88382 and represents the closest prior art.

It is an object of the present invention to provide a straddled vehicle that can enhance comfortableness of a rider and maintenance performance by reliably producing a fuel tank with a sufficient capacity and simultaneously by producing each of right and left foot rests with a large dimension in the vehicle width direction.

According to the present invention said object is solved by a straddled vehicle having the features of independent claim 1. Preferred embodiments are laid down in the dependent claims.

A straddled vehicle according to an aspect includes a head pipe portion, a down frame portion, a left side frame, a right side frame, a coupling frame, a seat, a storage portion, a left foot rest, a right foot rest, a tunnel portion, a fuel tank and an engine.

The down frame portion downwardly extends from the head pipe portion. The left side frame includes a left lower frame portion and a left rear frame portion. The left lower frame portion extends rearward and laterally leftward in a vehicle width direction from a lower portion of the down frame portion. The left rear frame portion extends rearward and upward from the left lower frame portion. The right side frame includes a right lower frame portion and a right rear frame portion. The right lower frame portion extends rearward and laterally rightward in the vehicle width direction from the lower portion of the down frame portion. The right rear frame portion extends rearward and upward from the right lower frame portion.

The coupling frame couples the left side frame and the right side frame. The seat is supported by the left rear frame portion and the right rear frame portion. The seat is a constituent element on which a rider is seated. The storage portion is disposed under the seat. The left foot rest is disposed in a lower position than the seat and is supported by the left lower frame portion. At least portion of the left foot rest is located forward of the seat. The right foot rest is disposed in a lower position than the seat and is supported by the right lower frame portion. At least portion of the right foot rest is located forward of the seat.

The tunnel portion protrudes upward, while being disposed between the left foot rest and the right foot rest in the vehicle width direction. The fuel tank is disposed in the tunnel portion. The engine includes a cylinder and a cylinder head cover. The cylinder head cover is disposed forward of the cylinder and is provided separately from the cylinder. At least portion of the engine is disposed rearward of the fuel tank and under the storage portion.

A lower end of an upper edge of the tunnel portion is disposed forward of the seat and in a lower position than an upper edge of the seat. At least portion of the fuel tank overlaps with the cylinder head cover in a vehicle front view. The coupling frame is joined to the left side frame and the right side frame at positions located rearward of at least portion of the cylinder head cover. An upper end of the coupling frame is disposed in a higher position than the cylinder head cover.

A dimension of the fuel tank in the vehicle width direction is smaller than a dimension of the fuel tank in a vehicle up-and down direction and is smaller than a dimension of the fuel tank in a vehicle back-and-forth direction. A lower edge of the fuel tank is disposed in a higher position than the left lower frame portion, the right lower frame portion, and a lower end of the cylinder head cover. A front portion of the fuel tank is attached to the down frame portion. A rear portion of the fuel tank is attached to the coupling frame at a position closer to a vehicle center in the vehicle width direction than the left lower frame portion and the right lower frame portion.

First, it has been conceived to enlarge the dimensions of the right and left foot rests in the vehicle width direction. However, the vehicle is enlarged when each of the right and left foot rests is enlarged laterally outward in the vehicle width direction. As a result, this enlargement may affect the bank angle of the vehicle.

In light of this, it is conceived to enlarge each of the right and left foot rests laterally inward in the vehicle width direction by devising the dimension of the fuel tank disposed in the tunnel portion. In other words, it is expected that by reducing the dimension of the fuel tank in the vehicle width direction, enlargement of the vehicle could be inhibited, and simultaneously, the dimensions of the right and left foot rests could be increased. Additionally, it is expected that by reducing the dimension of the fuel tank in the vehicle width direction, a space in the surroundings of the cylinder head cover is enlarged in the vehicle width direction, and hence, easiness to detach the cylinder head cover could be improved and accordingly maintenance performance could be enhanced.

However, it was found that there was still a room for improvement regarding easiness to detach the cylinder head cover. By reducing the dimension of the fuel tank in the vehicle width direction, the space in the surroundings of the cylinder head cover is enlarged in the vehicle width direction, and hence, accessibility to the cylinder head cover in the vehicle width direction is enhanced. However, it is required to equally increase the dimensions of the right and left foot rests in the vehicle width direction so as to enhance comfortableness of a rider. Therefore, the fuel tank and the cylinder head cover inevitably overlap in the vehicle width direction. As a result, it was found that easiness to detach the cylinder head cover could not be enhanced than the expectation.

To enhance easiness to detach the cylinder head cover, it can be assumed to enlarge a space between the fuel tank and the cylinder head cover in the vehicle back-and-forth direction. However, when the dimension of the fuel tank is reduced in the vehicle width direction so as to increase the dimensions of the right and left foot rests in the vehicle width direction, it becomes difficult to reduce the dimension of the fuel tank in the vehicle back-and-forth direction so as to reliably produce the fuel tank with a sufficient capacity.

In light of this, as with the motorcycle described in Japan Laid-open Patent Application Publication No. H02-88382, it has been conceived to downwardly shift the fuel tank with respect to the cylinder head cover. Japan Laid-open Patent Application Publication No. H02-88382 describes a construction that the upper edge of the fuel tank (4) is located in a lower position than the upper end of the cylinder head cover. Therefore, it is expected that with the construction of Japan Laid-open Patent Application Publication No. H02-88382, an overlapping range between the fuel tank and the cylinder head cover could be reduced in the vehicle up-and-down direction in a vehicle front view, and maintenance performance could be enhanced. However, it was found that maintenance performance could not be enhanced with this construction. This is because the storage portion or the coupling frame joined to the right and left side frames is disposed over the cylinder and hinders access to the cylinder head cover, and hence, maintenance performance cannot be enhanced.

In light of this, it has been examined a construction of upwardly shifting the fuel tank with respect to the cylinder head cover. It has been confronted another problem to be solved. To upwardly move the fuel tank, support portions for supporting the fuel tank from below ara required to be extended from the lower frames. In this case, it was concerned that access to the cylinder head cover was hindered by the support portions for supporting the fuel tank from below, even though the overlapping range between the fuel tank and the cylinder head cover was reduced in the vehicle up-and-down direction in the vehicle front view.

It has been firstly conceived to downwardly shift the fuel tank with respect to the cylinder head cover, this is because it was expected that the fuel tank could be easily and firmly supported with the construction. Referring back to Japan Laid-open Patent Application Publication No. H02-88382, the fuel tank has a wide width and is firmly fixed at the four corners thereof to the lower frames.

When the fuel tank has a wide width as described in Japan Laid-open Patent Application Publication No. H02-88382, it is required to broaden the interval between the right and left support portions so as to firmly support the fuel tank. In other words, the fuel tank having a wide width can be firmly supported by the right and left lower frames extending rearward and vehicle width directionally right and left from the down frame. However, it has been noticed that when the fuel tank has a small dimension in the vehicle width direction, the fuel tank is not required to be supported by the right and left lower frames.

In other words, it has been reached a conclusion that even when the front portion of the fuel tank was fixed to the down frame portion, the fuel tank could be reliably supported due to its small dimension in the vehicle width direction. Additionally, it has been also reached a conclusion that even when the rear portion of the fuel tank was fixed to the coupling frame, the fuel tank could be reliably supported due to its small dimension in the vehicle width direction. Consequently, by fixing the front portion of the fuel tank to the down frame portion and fixing the rear portion of the fuel tank to the coupling frame, the fuel tank can be upwardly shifted with respect to the cylinder head cover, and simultaneously, can be reliably supported. Additionally, the fuel tank can be supported without using the aforementioned support portions for supporting the fuel tank by the lower frames. Therefore, it is possible to inhibit hindering access to the cylinder head cover by the support portions of the fuel tank.

Moreover, in the straddled vehicle according to the present aspect, the lower edge of the fuel tank is disposed in a higher position than the right and left lower frames by upwardly shifting the position of the fuel tank with respect to the cylinder head cover. Therefore, it is also possible to inhibit degradation in accessibility to the cylinder head cover attributed to the right and left lower frames bulging in the vehicle width direction.

It should be noted that when the fuel tank is upwardly shifted with respect to the cylinder head cover, the lower end of the upper edge of the tunnel portion is located in a high position, and therefore, degradation in easiness to ride on/off the vehicle is concerned. However, in the straddled vehicle according to the present aspect, the fuel tank is disposed such that at least portion of the fuel tank overlaps with the cylinder head cover in a vehicle front view. Therefore, the upper edge of the tunnel portion can be located in a lower position than when the fuel tank is disposed in a higher position than the cylinder head cover so as not to entirely overlap with the cylinder head cover in a vehicle front view. Accordingly, degradation in easiness to ride on/off the vehicle can be inhibited.

As described above, in the straddled vehicle according to the present aspect, comfortableness of a rider can be enhanced by reliably producing the fuel tank with a sufficient capacity and by increasing the dimension of each of the right and left foot rests in the vehicle width direction. Additionally, maintenance performance can be enhanced by reliably supporting the fuel tank and by making attachment/detachment of the cylinder head cover easy.

The down frame portion may extend downward and rearward. A front end of the fuel tank may be disposed forward of a rear end of the down frame portion. In this case, the fuel tank can be reliably produced with a large capacity by increasing the dimension of the fuel tank in the vehicle back-and-forth direction. Additionally, the front portion of the fuel tank is attached to the down frame portion extending downward and rearward. Hence, the fuel tank is disposed in a high position. Accordingly, the dimension of the fuel tank can be easily increased in the vehicle back-and-forth direction.

The fuel tank may include a front attachment portion and a rear attachment portion. The front attachment portion is attached to the down frame portion, whereas the rear attachment portion is attached to the coupling frame. The front attachment portion and the rear attachment portion may be located between upper and lower ends of the fuel tank in the vehicle up-and-down dierction. In this case, the fuel tank, elongated in the vehicle up-and-down direction than in the vehicle width direction, can be easily supported with the simple construction.

The fuel tank may include a fuel tank body and a flange portion. The fuel tank body is configured to store a fuel. The flange portion is disposed to surround the fuel tank body. The flange portion may be attached to the down frame portion at a position forward of a front end of the fuel tank body and may be attached to the coupling frame at a position rearward of a rear end of the fuel tank body. In this case, attachment portions may not be mounted to the lateral sides of the fuel tank body. Therefore, portions of the flange portion, located on the lateral sides of the fuel tank body, can be reduced. Accordingly, the tunnel portion can be reduced in the vehicle width direction, and spaces located on the right and left of the tunnel portion for putting the feet of a rider can be enlarged.

The flange portion may be located in a higher position than a line extending from an axis of the cylinder in a vehicle side view. In this case, when the cylinder head cover is detached in a direction of the axis of the cylinder, it is possible to inhibit interference with the detachment work by the flange portion of the fuel tank. Therefore, maintenance performance can be enhanced.

The fuel tank body may include an upper tank portion and a lower tank portion. The upper tank portion is located over the flange portion, whereas the lower tank portion is located under the flange portion. A dimension of the upper tank portion in the vehicle up-and-down direction may be smaller than a dimension of the lower tank portion in the vehicle up-and-down direction. In this case, the flange portion can be located in a higher position than when the dimension of the upper tank portion in the vehicle up-and-down direction is larger than that of the lower tank portion in the vehicle up-and-down direction. Therefore, the flange portion can be disposed far away from the cylinder head cover. Accordingly, maintenance performance can be enhanced.

A dimension of a rear surface of the upper tank portion in the vehicle up-and-down direction may be smaller than a dimension of a rear surface of the lower tank portion in the vehicle up-and-down direction. In this case, the flange portion can be disposed far away from the cylinder head cover on the rear surface of the fuel tank that is disposed close to the cylinder head cover. Accordingly, maintenance performance can be enhanced.

The flange portion may be located in a higher position than the cylinder head cover.

The front portion of the fuel tank may be attached to the down frame portion at a position laterally inward of right and left outer ends of the fuel tank body.

The front portion of the fuel tank may be attached to the down frame portion at a higher position than the cylinder head cover.

The engine may be suspended from the left side frame and the right side frame at a lower position than the axis of the cylinder.

The straddled vehicle may further include a coupling member disposed over the fuel tank. A front portion of the coupling member may be connected to the down frame portion. A rear portion of the coupling member may be connected to the coupling frame. In this case, stiffness of the vehicle can be enhanced by the coupling member. Additionally, it is possible to more inhibit interference with a space for maintenance of the engine by the coupling member than when the coupling member is disposed under the fuel tank. Accordingly, maintenance performance can be enhanced.

In a vehicle plan view, the coupling member may be smaller than the fuel tank in the vehicle width direction. In this case, the coupling member has a small width. Hence, increase in width of the tunnel portion can be inhibited. Accordingly, large spaces for putting the feet of a rider can be reliably produced.

The straddled vehicle may further include a fuel pump attached to a bottom surface of the fuel tank. In the vehicle side view, the fuel pump may be located forward of a middle portion of the bottom surface of the fuel tank in the vehicle back-and-forth direction. In this case, the fuel pump can be disposed away from the engine. Hence, thermal effect on the fuel pump from the engine can be reduced. Additionally, it is possible to inhibit interference with a maintenance space located forward of the head cover by the fuel pump. Hence, maintenance performance can be enhanced.

In the vehicle front view, a portion not overlapping with the fuel tank in the cylinder head cover may have a larger area than a portion overlapping with the fuel tank in the cylinder head cover. In this case, a larger space for maintenance can be reliably produced in a position forward of the cylinder head cover.

The fuel tank may include a filler for fueling. The filler is disposed on an upper surface of the tunnel portion. In this case, with the fuel tank disposed in a high position, a large space for maintenance can be reliably produced in a position forward of the cylinder head cover, and simultaneously, the length of the filler can be shortened than when the fuel tank is disposed in a low position.

The engine may further include a first fixation member and a second fixation member. The first fixation member may fix the cylinder head cover to the cylinder. The second fixation member may be disposed in a lower position than the first fixation member, and may fix the cylinder head cover to the cylinder. A lower end portion of the fuel tank may be located in a higher position than the second fixation member.

A front portion of the storage portion may be supported by the coupling frame.

### BRIEF DESCRIPTION OF THE DRAWINGS

FIG. 1 is a side view of a straddled vehicle according to a preferred embodiment.
FIG. 2 is a perspective view of a vehicle body frame.
FIG. 3 is a perspective view of the vehicle body frame.
FIG. 4 is a side view of the vehicle body frame.
FIG. 5 is a top view of the vehicle body frame.
FIG. 6 is a front view of the vehicle body frame.
FIG. 7 is a cross-sectional view of FIG. 1 taken along line VII-VII.
FIG. 8 is a side view of a fuel tank.
FIG. 9 is a top view of the fuel tank.
FIG. 10 is a front view of the fuel tank.
FIG. 11 is a cross-sectional view of FIG. 8 taken along line XI-XI.
FIG. 12 is a cross-sectional view of FIG. 8 taken along line XII-XII.
FIG. 13 is a cross-sectional view of FIG. 8 taken along line XIII-XIII.
FIG. 14 is a top view of the fuel tank and the vehicle body frame.
FIG. 15 includes top views of fuel tank bodies according to modifications.
FIG. 16 includes side views of fuel tanks according to modifications.
FIG. 17 is a side view of a vehicle body frame according to another preferred embodiment.
FIG. 18 is a top view of the vehicle body frame according to the aforementioned another preferred embodiment.

### DETAILED DESCRIPTION OF THE PREFERRED EMBODIMENTS

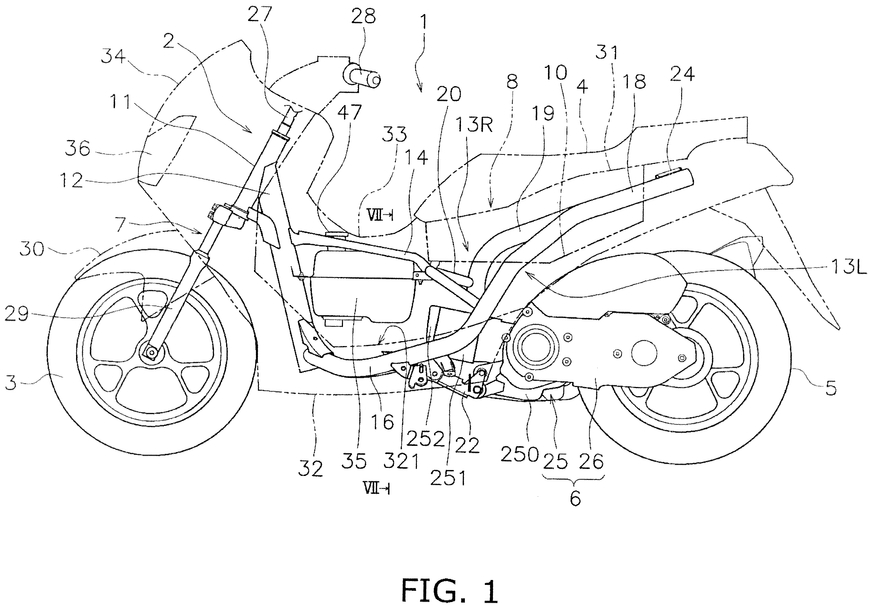

A straddled vehicle 1 according to a preferred embodiment will be hereinafter explained with reference to drawings. FIG. 1 is a side view of the straddled vehicle 1. The straddled vehicle 1 according to the present preferred embodiment is a scooter-type vehicle.

It should be noted that in the present specification, a back-and-forth direction of the straddled vehicle 1, an up-and-down direction of the straddled vehicle 1 and a right-and-left direction of the straddled vehicle 1 refer to a back-and-forth direction, an up-and-down direction and a right-and-left direction seen from a rider on the straddled vehicle 1. Additionally, the back-and-forth direction not only indicates directions arranged in parallel to the back-and-forth direction of the straddled vehicle 1, but also encompasses directions tilting within an angular range of ±45 degrees with respect to the back-and-forth direction of the straddled vehicle 1. In other words, a given direction closer to the back-and-forth direction than to the right-and-left direction and the up-and-down direction is classified as the back-and-forth direction.

Likewise, the up-and-down direction encompasses directions tilting within an angular range of ±45 degrees with respect to the up-and-down direction of the straddled vehicle 1. In other words, a given direction closer to the up-and-down direction than to the back-and-forth direction and the right-and-left direction is classified as the up-and-down direction.

Moreover, the right-and-left direction encompasses directions tilting within an angular range of ±45 degrees with respect to the right-and-left direction of the straddled vehicle 1. In other words, a given direction closer to the right-and-left direction than to the back-and-forth direction and the up-and-down direction is classified as the right-and-left direction.

As shown in FIG. 1, the straddled vehicle 1 includes a vehicle body frame 2, a front wheel 3, a seat 4, a rear wheel 5, a power unit 6, a steering device 7 and a vehicle body cover 8. It should be noted that FIG. 1 depicts the vehicle body cover 8 and the seat 4 with dashed two-dotted lines.

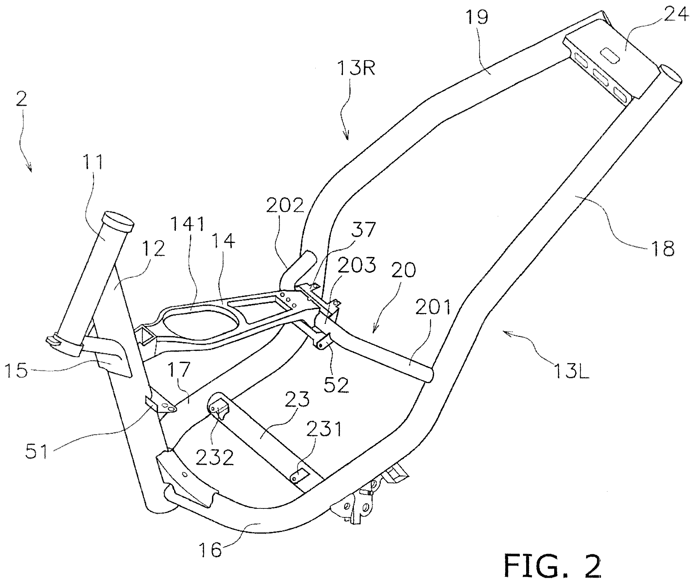

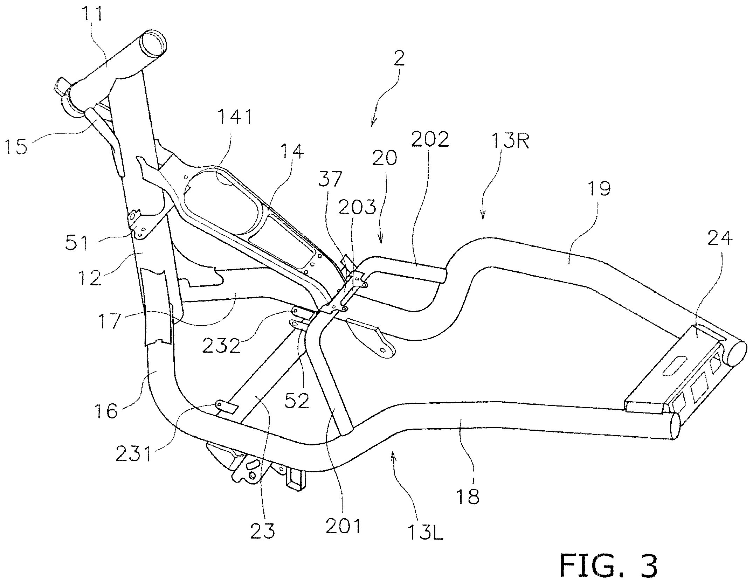

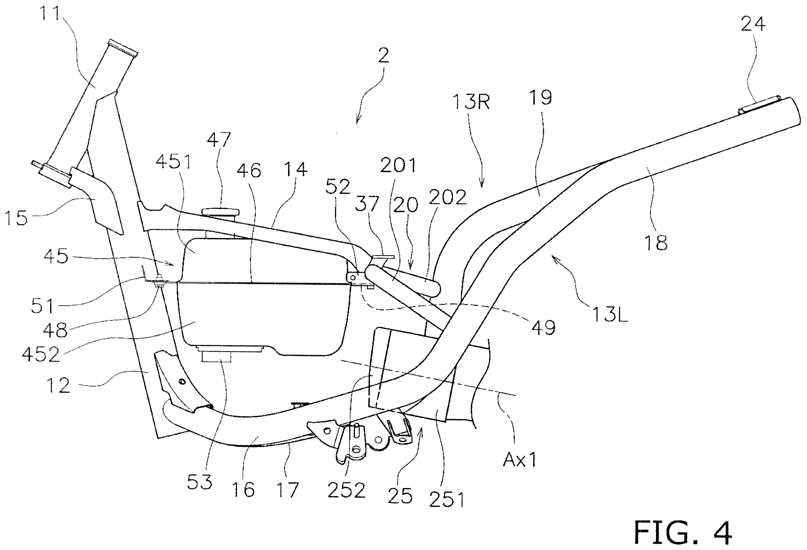

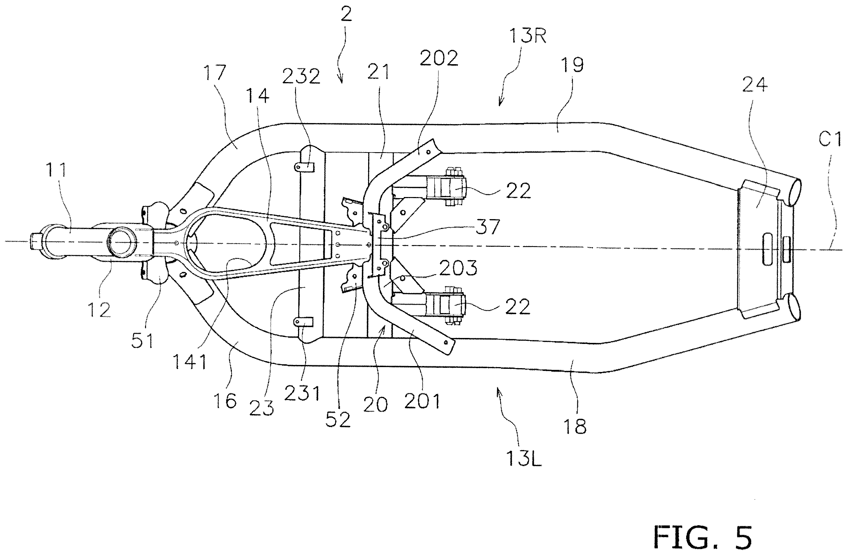

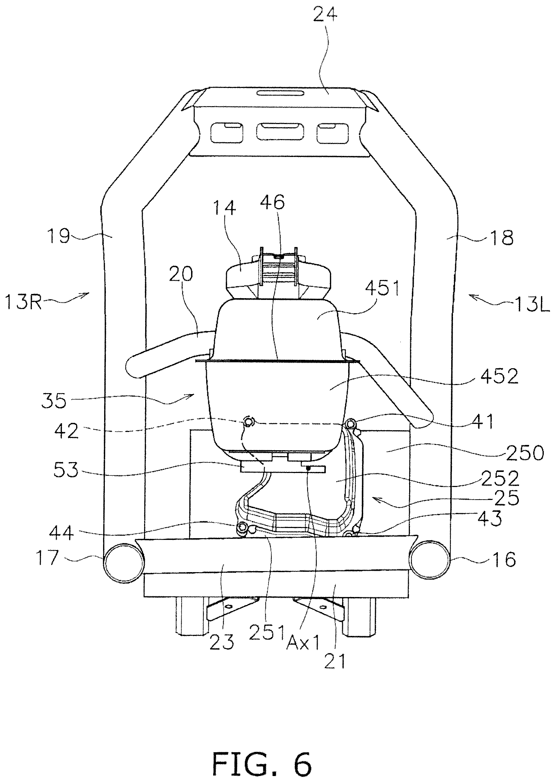

FIGS. 2 and 3 are perspective views of the vehicle body frame 2. FIG. 4 is a side view of the vehicle body frame 2. FIG. 5 is a plan view of the vehicle body frame 2. FIG. 6 is a front view of the vehicle body frame 2. It should be noted that in FIGS. 4 and 6, some of constituent elements such as a fuel tank 35 to be described are illustrated together with the vehicle body frame 2.

The vehicle body frame 2 includes a head pipe portion 11, a down frame portion 12, a left side frame 13L, a right side frame 13R, a coupling member 14 and a coupling frame 20. The down frame portion 12 extends downward and rearward from the head pipe portion 11. A gusset portion 15 is attached to the head pipe portion 11 and the down frame portion 12. The gusset portion 15 extends between the head pipe portion 1 1 and the down frame portion 12.

The left side frame 13L includes a left lower frame portion 16 and a left rear frame portion 18. The left lower frame portion 16 is disposed leftward of the head pipe portion 11. The left lower frame portion 16 is connected to a lower portion of the down frame portion 12. The left lower frame portion 16 extends rearward and laterally leftward in the vehicle width direction from the lower portion of the down frame portion 12.

The left rear frame portion 18 is disposed leftward of the head pipe portion 11. The left rear frame portion 18 is connected to a rear portion of the left lower frame portion 16. The left rear frame portion 18 extends rearward and upward from the left lower frame portion 16.

The right side frame 13R includes a right lower frame portion 17 and a right rear frame portion 19. The right lower frame portion 17 is disposed rightward of the head pipe portion 11. The right lower frame portion 17 is connected to the lower portion of the down frame portion 12. The right lower frame portion 17 extends rearward and laterally rightward in the vehicle width direction from the lower portion of the down frame portion 12.

The right rear frame portion 19 is disposed rightward of the head pipe portion 11. The right rear frame portion 19 is connected to a rear portion of the right lower frame portion 17. The right rear frame portion 19 extends rearward and upward from the right lower frame portion 17.

As shown in FIG. 5, the left lower frame portion 16 and the right lower frame portion 17 are coupled by a first cross frame portion 21. The first cross frame portion 21 extends in the vehicle width direction. The power unit 6 is attached to the first cross frame portion 21 through link members 22.

The left lower frame portion 16 and the right lower frame portion 17 are coupled by a second cross frame portion 23. The second cross frame portion 23 extends in the vehicle width direction. The second cross frame portion 23 is disposed forward of the first cross frame portion 21. A rear portion of the left rear frame portion 18 and that of the right rear frame portion 19 are coupled by a cross member 24.

The coupling frame 20 couples the left side frame 13L and the right side frame 13R. When described in detail, the coupling frame 20 connects the left rear frame portion 18 and the right rear frame portion 19 to each other. As shown in FIG. 5, in a vehicle plan view, at least portion of the coupling frame 20 overlaps with the first cross frame portion 21. At least portion of the coupling frame 20 is located over the lower frame portions 16 and 17.

The coupling frame 20 includes a left support portion 201, a right support portion 202 and a middle portion 203. The left support portion 201 is connected to the left rear frame portion 18. As shown in the vehicle side view of FIG. 4, the left support portion 201 extends obliquely upward to the front from the left rear frame portion 18. The right support portion 202 is connected to the right rear frame portion 19. In the vehicle side view, the right support portion 202 extends obliquely upward to the front from the right rear frame portion 19.

As shown in FIG. 5, the left support portion 201 and the right support portion 202 are connected through the middle portion 203. In the vehicle plan view, the middle portion 203 extends in the vehicle width direction. In the vehicle plan view, the left support portion 201 extends forward and laterally inward from the left rear frame portion 18. In the vehicle plan view, the right support portion 202 extends forward and laterally inward from the right rear frame portion 19.

It should be noted that the term "laterally inward" means directions that approach, along the vehicle width direction, to a vehicle center line C1 passing through the vehicle width directional center of the vehicle. On the other hand, the term "laterally outward" means directions that separate, along the vehicle width direction, from the vehicle center line C1 passing through the vehicle width directional center of the vehicle.

The coupling member 14 is disposed in a higher position than the lower frame portions 16 and 17 and extends in the vehicle back-and-forth direction. The coupling member 14 couples the down frame portion 12 and the coupling frame 20. As shown in the vehicle side view of FIG. 4, the coupling member 14 tilts with respect to the vehicle back-and-forth direction. The coupling member 14 tilts forward and upward.

A front portion of the coupling member 14 is connected to the down frame portion 12 at a higher position than a lower end portion of the gusset portion 15. A rear portion of the coupling member 14 is connected to the coupling frame 20. When described in detail, as shown in FIG. 5, the rear portion of the coupling member 14 is connected to the middle portion 203 of the coupling frame 20.

As shown in FIG. 1, the seat 4 is supported by the vehicle body frame 2. The seat 4 is a portion on which the rider is seated. The seat 4 is supported by the right and left side frames 13R and 13L. When described in detail, a front portion of the seat 4 is supported by the right and left side frames 13R and 13L through a storage portion 10. A rear portion of the seat 4 is supported by the right and left side frames 13R and 13L through the cross member 24. It should be noted that the structure for supporting the seat 4 is not limited to the above, and may be changed. For example, the seat 4 may be directly supported by the right and left side frames 13R and 13L. Alternatively, the seat 4 may be indirectly supported by the right and left side frames 13R and 13L through a stay (not shown in the drawings). The seat 4 is disposed over the left and right rear frame portions 18 and 19. The seat 4 is supported by the left and right rear frame portions 18 and 19.

The storage portion 10 is disposed under the seat 4. A front portion of the storage portion 10 is supported by the coupling frame 20. The storage portion 10 includes an accommodation space that belongings of the rider (e.g., a helmet or gloves) can be put therein or taken therefrom. As shown in FIG. 4, a support bracket 37 is attached to the coupling frame 20. The storage portion 10 is attached to the support bracket 37. The storage portion 10 is supported by the coupling frame 20 through the support bracket 37.

The power unit 6 is disposed under the seat 4. The power unit 6 is pivotably supported by the vehicle body frame 2. The power unit 6 supports the rear wheel 5 such that the rear wheel 5 is rotatable. The power unit 6 includes an engine 25 and a transmission 26.

The engine 25 includes a crankcase 250, a cylinder 251 and a cylinder head cover 252. The crankcase 250 is disposed forward of the rear wheel 5. The cylinder 251 is disposed forward of the crankcase 250. In the vehicle side view, the cylinder 251 is located under the coupling frame 20. As shown in FIG. 4, an axis Ax1 of the cylinder 251 extends in the vehicle back-and-forth direction. The axis Ax1 of the cylinder 251 forms an angle of less than 45 degrees with respect to a horizontal direction.

The cylinder head cover 252 is disposed in front of the cylinder 251. The cylinder head cover 252 is provided separately from the cylinder 251. The cylinder head cover 252 is detachably attached to the cylinder 251. The aforementioned coupling frame 20 is joined to the left side frame 13L and the right side frame 13R at positions located rearward of at least portion of the cylinder head cover 252. The upper end of the coupling frame 20 is disposed in a higher position than the cylinder head cover 252.

As shown in FIG. 6, the engine 25 includes a first left fixation member 41, a first right fixation member 42, a second left fixation member 43 and a second right fixation member 44. For example, the first left fixation member 41, the first right fixation member 42, the second left fixation member 43 and the second right fixation member 44 are bolts. It should be noted that the first left fixation member 41, the first right fixation member 42, the second left fixation member 43 and the second right fixation member 44 may be members other than bolts. The cylinder head cover 252 is fixed to the cylinder 251 by the first left fixation member 41, the first right fixation member 42, the second left fixation member 43 and the second right fixation member 44.

The first left fixation member 41 and the second left fixation member 43 are disposed leftward of the axis Ax1 of the cylinder 251. The second left fixation member 43 is disposed in a lower position than the first left fixation member 41. The first right fixation member 42 and the second right fixation member 44 are disposed rightward of the axis Ax1 of the cylinder 251. The second right fixation member 44 is disposed in a lower position than the first right fixation member 42.

The cylinder head cover 252 is detachable by detaching the first left fixation member 41, the first right fixation member 42, the second left fixation member 43 and the second right fixation member 44 from the engine 25, and thus, a maintenance work can be performed. For example, a valve clearance inside the cylinder 251 can be regulated by detaching the cylinder head cover 252.

Portion of the engine 25 is disposed rearward of the fuel tank 35 and under the storage portion 10. The engine 25 is suspended from the left side frame 13L and the right side frame 13R through the aforementioned link members 22 and the aforementioned first cross frame portion 21. As shown in FIG. 1, the link members 22 are coupled to the engine 25 in a lower position than the cylinder 251. Therefore, the engine 25 is suspended from the left side frame 13L and the right side frame 13R in a lower position than the cylinder 251.

The steering device 7 includes a steering shaft 27, a handle member 28 and a suspension 29. The steering shaft 27 is inserted into the head pipe portion 11. The steering shaft 27 is supported by the head pipe portion 11 and is thereby turnable right and left. A lower portion of the steering shaft 27 is connected to the suspension 29.

The suspension 29 supports the front wheel 3 such that the front wheel 3 is rotatable. A front fender 30 is disposed over the front wheel 3. An upper portion of the steering shaft 27 is joined to the handle member 28. The handle member 28 is configured to be operated by the rider to pivot the front wheel 3.

The vehicle body cover 8 includes a rear cover 31, a lower cover 32, a tunnel portion 33 and a front cover 34. The rear cover 31 covers the surroundings of the left and right rear frame portions 18 and 19. The rear cover 31 is disposed under the seat 4. The front cover 34 is disposed forward of the seat 4. The front cover 34 covers the surroundings of the head pipe portion 11. The front cover 34 covers the surroundings of the down frame portion 12. A headlamp 36 is attached to the front cover 34.

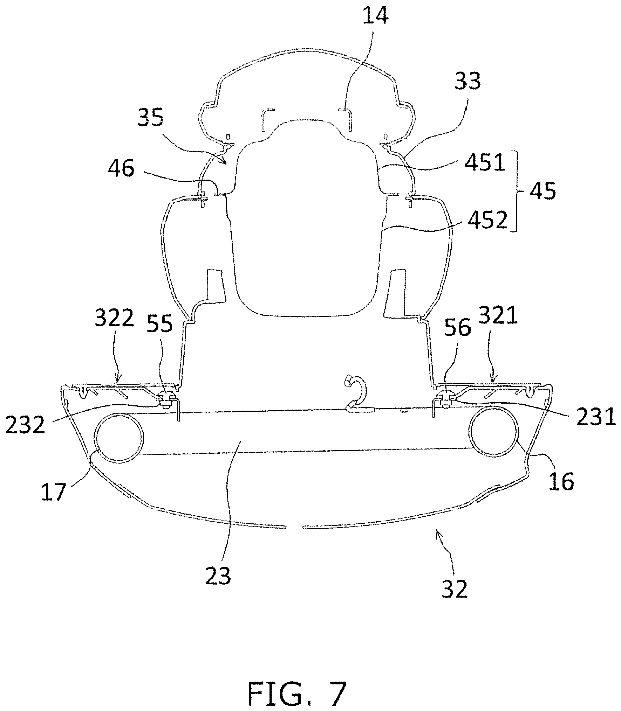

The lower cover 32 is disposed between the front cover 34 and the rear cover 31. The lower cover 32 covers the surroundings of the lower frame portions 16 and 17. FIG. 7 is a cross-sectional view of FIG. 1 taken along line VII-VII. As shown in FIG. 7, the upper surface of the lower cover 32 includes a left foot rest 321 and a right foot rest 322. The left and right foot rests 321 and 322 are disposed in lower positions than the seat 4.

As shown in FIG. 1, at least portion of the left foot rest 321 is located between the rear end of the head pipe portion 11 and the front end of the seat 4 in the vehicle back-and-forth direction. The left foot rest 321 is disposed leftward of the head pipe portion 11. At least portion of the left foot rest 321 is located forward of the seat 4, and is supported by the left lower frame portion 16. The left foot rest 321 is disposed in a lower position than the coupling member 14.

The right foot rest 322 is disposed approximately bilaterally symmetric to the left foot rest 321. Therefore, at least portion of the right foot rest 322 is located between the rear end of the head pipe portion 11 and the front end of the seat 4 in the vehicle back-and-forth direction. The right foot rest 322 is disposed rightward of the head pipe portion 11. At least portion of the right foot rest 322 is located forward of the seat 4, and is supported by the right lower frame portion 17. The right foot rest 322 is disposed in a lower position than the coupling member 14.

When described in detail, as shown in FIG. 7, a left bracket 231 and a right bracket 232 are attached to the second cross frame portion 23. The left foot rest 321 is attached to the left bracket 231 by a bolt 56. The left foot rest 321 is supported by the left bracket 231. In other words, the left foot rest 321 is supported by the left lower frame portion 16 through the left bracket 231 and the second cross frame portion 23. The right foot rest 322 is attached to the right bracket 232 by a bolt 55. The right foot rest 322 is supported by the right bracket 232. In other words, the right foot rest 322 is supported by the right lower frame portion 17 through the right bracket 232 and the second cross frame portion 23.

It should be noted that the left foot rest 321 may be directly supported by the left lower frame portion 16, or alternatively, may be indirectly supported by the left lower frame portion 16 through a bracket and/or so forth. Likewise, the right foot rest 322 may be directly supported by the right lower frame portion 17, or alternatively, may be indirectly supported by the right lower frame portion 17 through a bracket and/or so forth.

The tunnel portion 33 is disposed between the left and right foot rests 321 and 322 in the vehicle width direction. The tunnel portion 33 upwardly protrudes from the left and right foot rests 321 and 322. The tunnel portion 33 is disposed between the front cover 34 and the rear cover 31 in the vehicle back-and-forth direction. The tunnel portion 33 has a cross-section made in an upwardly bulging convex shape. The tunnel portion 33 extends in the vehicle back-and-forth direction. The lower end of the upper edge of the tunnel portion 33 is disposed forward of the seat 4, and is also disposed in a lower position than the upper edge of the seat 4.

The coupling member 14 and the fuel tank 35 are disposed within the tunnel portion 33. The coupling member 14 is disposed over the fuel tank 35 within the tunnel portion 33. The fuel tank 35 will be hereinafter explained in detail.

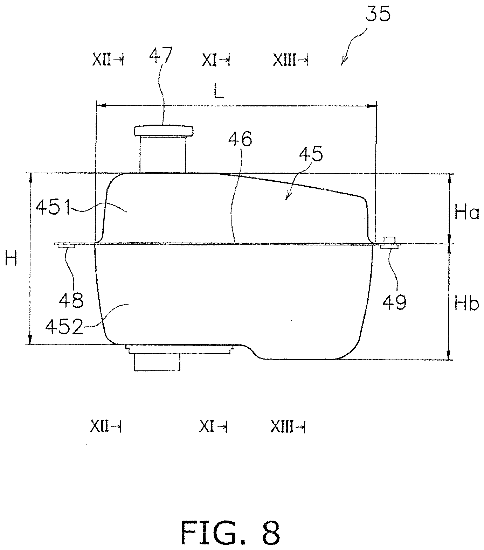

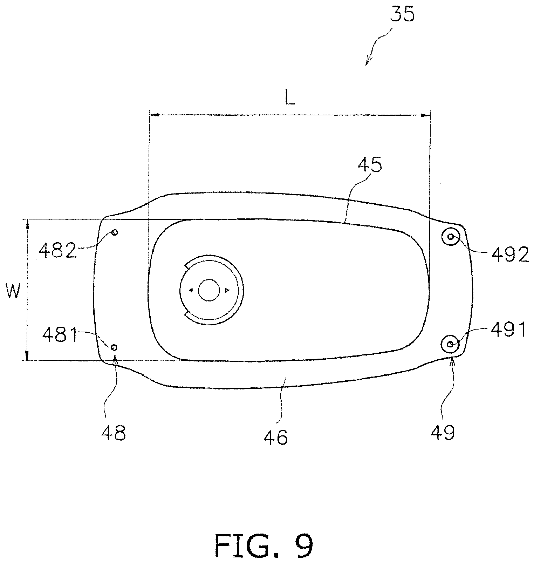

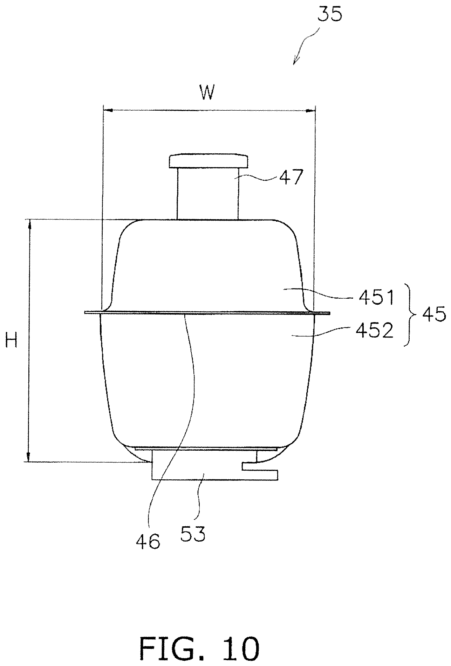

FIG. 8 is a side view of the fuel tank 35. FIG. 9 is a top view of the fuel tank 35. FIG. 10 is a front view of the fuel tank 35. As shown in FIG. 8, a vehicle up-and-down directional dimension H of the fuel tank 35 is smaller than a vehicle back-and-forth directional dimension L of the fuel tank 35. As shown in FIG. 9, a vehicle width directional dimension W of the fuel tank 35 is smaller than the vehicle back-and-forth directional dimension L of the fuel tank 35. As shown in FIG. 10, the vehicle width directional dimension W of the fuel tank 35 is smaller than the vehicle up-and-down directional dimension H of the fuel tank 35. It should be noted that the dimensions of the fuel tank 35 are herein defined as meaning those of a fuel tank body 45 to be described.

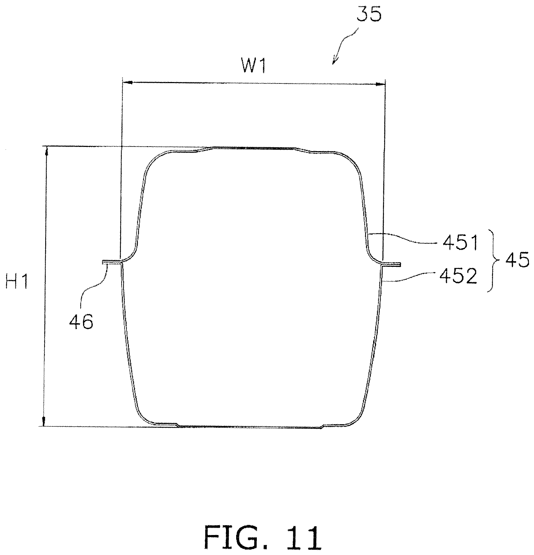

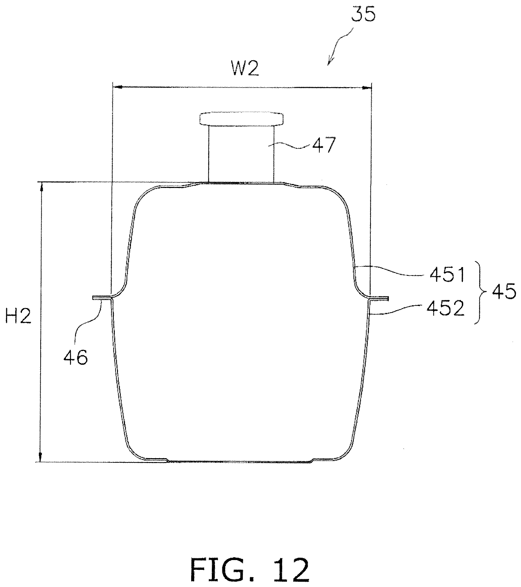

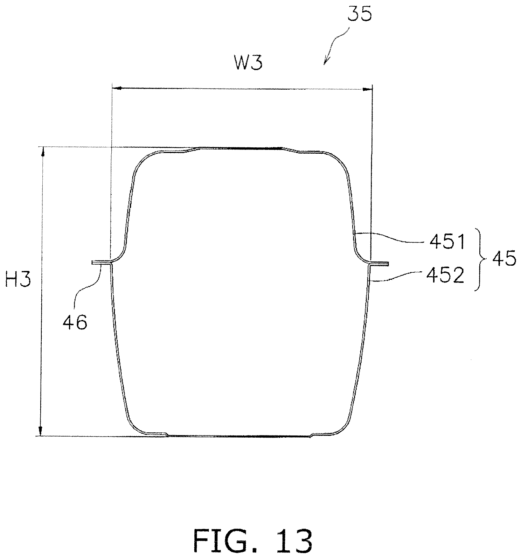

FIG. 11 is a cross-sectional view of FIG. 8 taken along line XI-XI and shows a cross-sectional view of a vehicle back-and-forth directional intermediate portion of the fuel tank 35. FIG. 12 is a cross-sectional view of FIG. 8 taken along line XII-XII and shows a cross-sectional view of a front portion of the fuel tank 35, i.e., a portion located between the front end and the vehicle back-and-forth directional intermediate portion of the fuel tank 35. FIG. 13 is a cross-sectional view of FIG. 8 taken along line XIII-XIII and shows a cross-sectional view of a rear portion of the fuel tank 35, i.e., a portion located between the rear end and the vehicle back-and-forth directional intermediate portion of the fuel tank 35.

As shown in FIG. 11, the vehicle back-and-forth directional intermediate portion of the fuel tank 35 is made in an elongated shape that a vehicle up-and-down directional dimension H1 is larger than a vehicle width directional dimension W1. As shown in FIG. 12, similarly to the vehicle back-and-forth directional intermediate portion of the fuel tank 35, the front portion of the fuel tank 35 is made in an elongated shape that a vehicle up-and-down directional dimension H2 is larger than a vehicle width directional dimension W2. As shown in FIG. 13, similarly to the vehicle back-and-forth directional intermediate portion and the front portion of the fuel tank 35, the rear portion of the fuel tank 35 is made in an elongated shape that a vehicle up-and-down directional dimension H3 is larger than a vehicle width directional dimension W3.

The fuel tank 35 is made of sheet metal. It should be noted that the fuel tank 35 may be made of resin. The fuel tank 35 includes the fuel tank body 45 and a flange portion 46. The fuel tank body 45 includes an internal space for storing fuel. The flange portion 46 is disposed to surround the fuel tank body 45. The flange portion 46 horizontally protrudes from the fuel tank body 45.

The fuel tank body 45 includes an upper tank portion 451 and a lower tank portion 452. The upper tank portion 451 is located over the flange portion 46, whereas the lower tank portion 452 is located under the flange portion 46. The upper tank portion 451 and the lower tank portion 452 are joined at the flange portion 46. As shown in FIG. 8, a vehicle up-and-down directional dimension Ha of the upper tank portion 451 is smaller than a vehicle up-and-down directional dimension Hb of the lower tank portion 452.

As shown in the vehicle side view of FIG. 4, the flange portion 46 is located in a higher position than the cylinder head cover 252. In the vehicle side view, the flange portion 46 is located over an extension of the axis Ax1 of the cylinder 251. Additionally in the vehicle side view, the flange portion 46 extends in the horizontal direction.

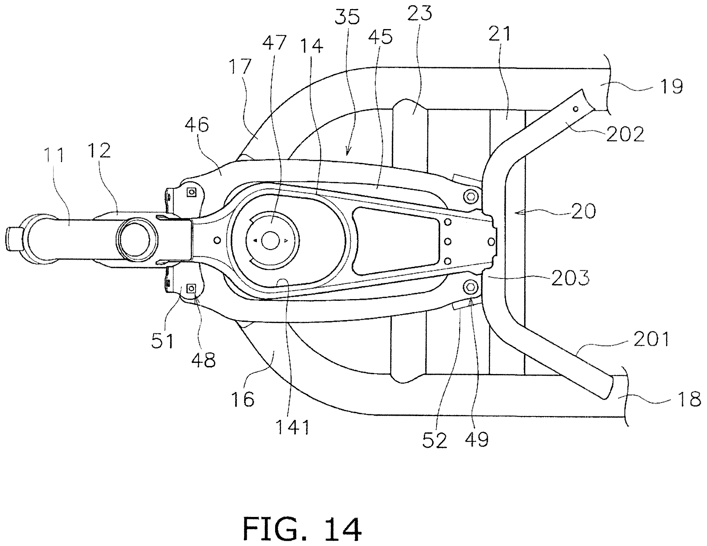

The fuel tank 35 includes a filler 47 for fueling. The filler 47 upwardly protrudes from the fuel tank body 45. FIG. 14 is a top view showing portion of the fuel tank 35 and the vehicle body frame 2. As shown in FIG. 14, the filler 47 extends in the vehicle up-and-down direction through an opening 141 bored in the coupling member 14. The filler 47 is disposed on the upper surface of the tunnel portion 33.

A front portion of the fuel tank 35 is attached to the down frame portion 12. A rear portion of the fuel tank 35 is attached to the coupling frame 20. As shown in FIG. 14, the front portion of the fuel tank 35 is attached to the down frame portion 12 at a position closer to the vehicle width directional center of the vehicle than the left lower frame portion 16 and the right lower frame portion 17. On the other hand, the rear portion of the fuel tank 35 is attached to the coupling frame 20 at a position closer to the vehicle width directional center of the vehicle than the left lower frame portion 16 and the right lower frame portion 17.

As shown in FIG. 8, the fuel tank 35 includes a front attachment portion 48 and a rear attachment portion 49. The front attachment portion 48 and the rear attachment portion 49 are provided in the flange portion 46. The front attachment portion 48 is attached to the down frame portion 12. As shown in FIG. 9, the front attachment portion 48 includes holes 481 and 482 through which bolts are inserted. The front attachment portion 48 is fixed to the down frame portion 12 by the bolts. When described in detail, the front attachment portion 48 is fixed to a front bracket 51 mounted to the down frame portion 12 as shown in FIG. 14.

The rear attachment portion 49 is attached to the coupling frame 20. As shown in FIG. 9, the rear attachment portion 49 includes holes 491 and 492 through which bolts are inserted. The rear attachment portion 49 is attached to the coupling frame 20 by the bolts. When described in detail, the rear attachment portion 49 is attached to a rear bracket 52 mounted to the coupling frame 20 as shown in FIG. 14.

The front attachment portion 48 and the rear attachment portion 49 are located between the upper and lower ends of the fuel body tank 45 in the vehicle up-and-down direction. The front attachment portion 48 and the rear attachment portion 49 are located in higher positions than the middle of the upper and lower ends of the fuel tank body 45 in the vehicle up-and-down direction.

The front attachment portion 48 is located forward of the front end of the fuel tank body 45. Therefore, the front portion of the fuel tank 35 is attached to the down frame portion 12 at a position forward of the front end of the fuel tank body 45. The front attachment portion 48 is located laterally inward of the right and left outer ends of the fuel tank body 45. Therefore, the front portion of the fuel tank 35 is attached to the down frame portion 12 at a position laterally inward of the right and left outer ends of the fuel tank body 45. The front attachment portion 48 is located in a higher position than the cylinder head cover 252. Therefore, the front portion of the fuel tank 35 is attached to the down frame portion 12 at a higher position than the cylinder head cover 252.

The rear attachment portion 49 is located rearward of the rear end of the fuel tank body 45. Therefore, the rear portion of the fuel tank 35 is attached to the coupling frame 20 at a position rearward of the rear end of the fuel tank body 45. The rear attachment portion 49 is located laterally inward of the right and left outer ends of the fuel tank body 45. Therefore, the rear portion of the fuel tank 35 is attached to the coupling frame 20 at a position laterally inward of the right and left outer ends of the fuel tank body 45. The rear attachment portion 49 is located in a higher position than the cylinder head cover 252. Therefore, the rear portion of the fuel tank 35 is attached to the coupling frame 20 at a higher position than the cylinder head cover 252.

The rear attachment portion 49 is disposed at the same height as the front attachment portion 48. It should be noted that the rear attachment portion 49 may be disposed at a different height from the front attachment portion 48.

The upper edge of the fuel tank body 45 is located in a higher position than the upper edge of the cylinder head cover 252. The lower edge of the fuel tank body 45 is disposed in a higher position than the left lower frame portion 16 and the right lower frame portion 17. The fuel tank 35 is not supported from below by the left lower frame portion 16 and the right lower frame portion 17. In other words, any member is not disposed below the fuel tank 35 in order to support the fuel tank 35. The fuel tank 35 is disposed over the left lower frame portion 16 and the right lower frame portion 17 with a space from the left lower frame portion 16 and the right lower frame portion 17.

The lower edge of the fuel tank body 45 is located in a higher position than the lower end of the cylinder head cover 252. The lower edge of the fuel tank body 45 is located in a higher position than the left and right foot rests 321 and 322. When described in detail, the entirety of the lower edge of the fuel tank body 45 is located in a higher position than the lower end of the cylinder head cover 252. The entirety of the lower edge of the fuel tank body 45 is located in a higher position than the left and right foot rests 321 and 322.

The lower edge of the fuel tank body 45 is located in a lower position than the upper end of the cylinder head cover 252. When described in detail, the entirety of the lower edge of the fuel tank body 45 is located in a lower position than the upper end of the cylinder head cover 252. The front end of the fuel tank body 45 is disposed forward of the rear end of the down frame portion 12. The rear end of the fuel tank body 45 is disposed forward of the front end of the cylinder head cover 252.

A fuel pump 53 is attached to the bottom surface of the fuel tank 35. In the vehicle side view, the fuel pump 53 is located forward of a middle portion of the bottom surface of the fuel tank 35 in the vehicle back-and-forth direction. The fuel pump 53 is disposed in a higher position than the left lower frame portion 16 and the right lower frame portion 17. With the construction, attachment and detachment of the fuel pump 53 can be easily performed.

As shown in the vehicle front view of FIG. 6, at least portion of the fuel tank 35 overlaps with the cylinder head cover 252. In the vehicle front view, a portion not overlapping with the fuel tank 35 in the cylinder head cover 252 has a larger area than the portion overlapping with the fuel tank 35 in the cylinder head cover 252.

In the vehicle front view, at least portion of the lower edge of the fuel tank body 45 overlaps with the cylinder head cover 252. In the vehicle front view, the upper edge of the fuel tank body 45 is located in a higher position than the cylinder head cover 252 without overlapping with the cylinder head cover 252. When described in detail, portion of the lower tank portion 452 overlaps with the cylinder head cover 252 in the vehicle front view. In the vehicle front view, the entirety of the upper tank portion 451 is located in a higher position than the cylinder head cover 252 without overlapping with the cylinder head cover 252. In the vehicle front view, the entirety of the flange portion 46 is located in a higher position than the cylinder head cover 252 without overlapping with the cylinder head cover 252.

The lower end portion of the fuel tank 35 is located in a lower position than the first left fixation member 41 and the first right fixation member 42. The lower end portion of the fuel tank 35 is located in a higher position than the second left fixation member 43 and the second right fixation member 44.

In the vehicle front view, at least either of the first left fixation member 41 and the first right fixation member 42 overlaps with the fuel tank 35. In the vehicle front view, one of the first left fixation member 41 and the first right fixation member 42 overlaps with the fuel tank 35, whereas the other is located laterally to the fuel tank 35 without overlapping with the fuel tank 35. In the present preferred embodiment, in the vehicle front view, the first right fixation member 42 overlaps with the fuel tank 35, whereas the first left fixation member 41 is located laterally to the fuel tank 35 without overlapping with the fuel tank 35.

The fuel tank 35 is disposed away from the cylinder head cover 252 through a space in the axial direction of the first left fixation member 41 and that of the first right fixation member 42. In the vehicle front view, the second left fixation member 43 and the second right fixation member 44 are located in lower positions than the fuel tank 35 without overlapping with the fuel tank 35.

In the straddled vehicle 1 according to the present preferred embodiment explained above, the vehicle width directional dimension W of the fuel tank 35 is smaller than the vehicle up-and-down directional dimension H of the fuel tank 35 and is also smaller than the vehicle back-and-forth directional dimension L of the fuel tank 35. Therefore, each of the left and right foot rests 321 and 322 can be enlarged laterally inward in the vehicle width direction. In other words, each of the left and right foot rests 321 and 322 can be reliably produced with a large width dimension while being inhibited from being enlarged laterally outward in the vehicle width direction. Consequently, increase in size of the vehicle can be inhibited, and simultaneously, each of the left and right foot rests 321 and 322 can be produced with a large dimension.

The lower edge of the fuel tank 35 is disposed in a higher position than the lower end of the cylinder head cover 252, the left lower frame portion 16, and the right lower frame portion 17. Additionally, the front portion of the fuel tank 35 is attached to the down frame portion 12, whereas the rear portion of the fuel tank 35 is attached to the coupling frame 20. Accordingly, a support portion for supporting the fuel tank 35 from below is not required. Thus, a large space for access to the cylinder head cover 252 can be reliably produced below the fuel tank 35. Moreover, the left and right lower frame portions 16 and 17 can be inhibited from hindering access to the cylinder head cover 252. Therefore, the cylinder head cover 252 is easily accessible through the space located under the fuel tank 35 and over the left and right lower frame portions 16 and 17. Accordingly, maintenance performance of the engine 25 can be enhanced.

Furthermore, the interval between the left lower frame portion 16 and the right lower frame portion 17 imposes less restrictions on the shape of the fuel tank 35 than when the lower edge of the fuel tank 35 is disposed in a lower position than the lower end of the cylinder head cover 252, the left lower frame portion 16, and the right lower frame portion 17. Accordingly, the fuel tank 35 can be reliably produced with a sufficient capacity. Additionally, the filler 47 can be inhibited from being elongated. Hence, cost increase can be inhibited.

Moreover, as described above, the fuel tank 35 has a compact shape in the width direction thereof. Therefore, the fuel tank 35 can be firmly supported even when the fuel tank 35 is supported by the down frame portion 12 and the coupling frame 20 and is thereby supported at a position closer to the vehicle center than the left lower frame portion 16 and the right lower frame portion 17.

Furthermore, in the present preferred embodiment, the fuel tank 35 is disposed in a relatively high position within the tunnel portion 33 such that portion of the fuel tank 35 overlaps with the cylinder head cover 252 in the vehicle front view. Therefore, the upper edge of the tunnel portion 33 can be located in a lower position than when the entirety of the fuel tank 35 is disposed in a higher position than the cylinder head cover 252. Accordingly, degradation in comfortableness of the rider can be inhibited in riding on/off the vehicle.

Additionally, in the present preferred embodiment, each of the left and right foot rests 321 and 322 is reliably produced with a large width dimension by producing the fuel tank 35 with a small width dimension, and simultaneously, the fuel tank 35 is reliably produced with a large capacity by producing the fuel tank 35 with a large up-and-down directional dimension. Moreover, in the vehicle front view, portion of the fuel tank 35 overlaps with the cylinder head cover 252. Hence, even when the fuel tank 35 is produced with a large up-and-down directional dimension, the upper edge of the fuel tank 35 can be inhibited from being located in an extremely high position. Accordingly, the height of the tunnel portion 33 can be inhibited from being excessively high, and thereby, the tunnel portion 33 can be easily straddled by the rider.

As described above, in the straddled vehicle 1 according to the present preferred embodiment, comfortableness of the rider can be enhanced by reliably producing the fuel tank 35 with a large capacity and simultaneously by producing each of the left and right foot rests 321 and 322 with a large vehicle width directional dimension. Additionally, maintenance performance can be enhanced by reliably and firmly supporting the fuel tank 35 and simultaneously by making attachment and detachment of the cylinder head cover 252 easy.

The number of front wheels of the straddled vehicle 1 is not limited to one, and alternatively, may be two or greater. The number of rear wheels of the straddled vehicle 1 is not limited to one, and alternatively, may be two or greater.

The structure of the vehicle body frame 2 is not limited to that of the aforementioned preferred embodiment, and may be changed. For example, the coupling frame 20 may not be necessarily connected to the left and right rear frame portions 18 and 19, and may be connected to the left and right lower frame portions 16 and 17. The storage portion 10 may not be necessarily supported by the coupling frame 20, and may be supported by another member.

Portion of each left/right foot rest 321/322 may be located forward of the seat 4. Alternatively, the entirety of each left/right foot rest 321/322 may be located forward of the seat 4. The entirety of the engine 25 may be disposed rearward of the fuel tank 35 and under the storage portion 10.

The shape and positional arrangement of the fuel tank 35 are not limited to those of the aforementioned preferred embodiment, and may be changed. For example, in a vehicle front view, the entirety of the fuel tank 35 may overlap with the cylinder head cover 252.

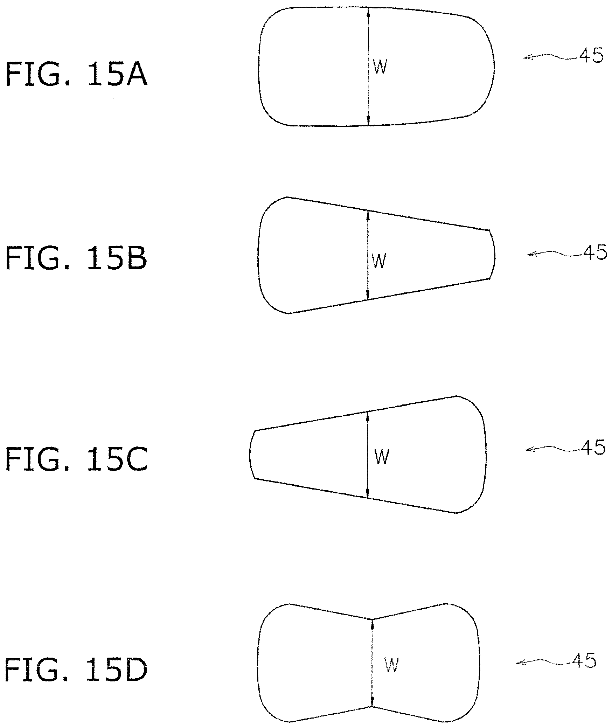

FIG. 15 includes top views of the fuel tank body 45 according to modifications. FIG. 15(A) is a top view of the fuel tank body 45 according to the aforementioned preferred embodiment. It should be noted that in FIG. 15, the left direction in the drawing corresponds to the vehicle front direction, whereas the right direction in the drawing corresponds to the vehicle rear direction. Additionally, in FIG. 15, the up-and-down direction in the drawing corresponds to the vehicle width direction. As shown in FIG. 15(A), the fuel tank body 45 according to the preferred embodiment has a vehicle back-and-forth directionally elongated shape in the vehicle plan view. The vehicle width directional dimension W of the fuel tank body 45 is approximately constant regardless of the positions in the vehicle back-and-forth direction.

It should be noted that as shown in FIG. 15(B), the vehicle width directional dimension W of the fuel tank body 45 may increase toward the front side of the vehicle. Alternatively, as shown in FIG. 15(C), the vehicle width directional dimension W of the fuel tank body 45 may decrease toward the front side of the vehicle. Yet alternatively, as shown in FIG. 15(D), the vehicle width directional dimension W of the fuel tank body 45 may decrease from the vehicle back-and-forth directional ends of the fuel tank body 45 toward the vehicle back-and-forth directional middle of the fuel tank body 45.

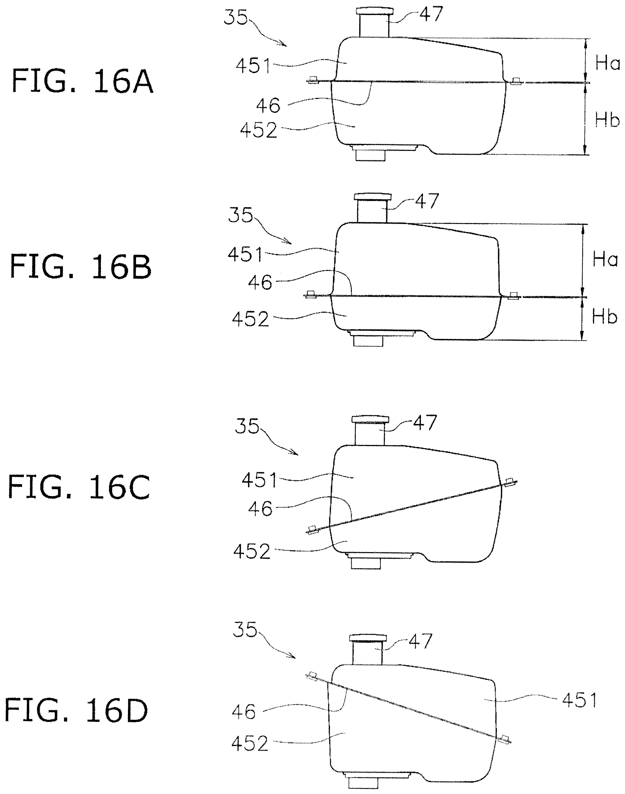

FIG. 16 includes side views of the fuel tank 35 according to modifications. FIG. 16(A) is a side view of the fuel tank 35 according to the aforementioned preferred embodiment. As shown in FIG. 16(A), in the fuel tank 35 according to the preferred embodiment, the vehicle up-and-down directional dimension Ha of the upper tank portion 451 is smaller than the vehicle up-and-down directional dimension Hb of the lower tank portion 452. However, as shown in FIG. 16(B), the vehicle up-and-down directional dimension Ha of the upper tank portion 451 may be larger than the vehicle up-and-down directional dimension Hb of the lower tank portion 452. Alternatively, the vehicle up-and-down directional dimension Ha of the upper tank portion 451 may be equal to the vehicle up-and-down directional dimension Hb of the lower tank portion 452.

As shown in FIG. 16(A), in the fuel tank 35 according to the preferred embodiment, the flange portion 46 horizontally extends in the vehicle side view. However, as shown in FIG. 16(C), the flange portion 46 may extend obliquely downward to the front in the vehicle side view. Alternatively, as shown in FIG. 16(D), the flange portion 46 may extend obliquely upward to the front in the vehicle side view.

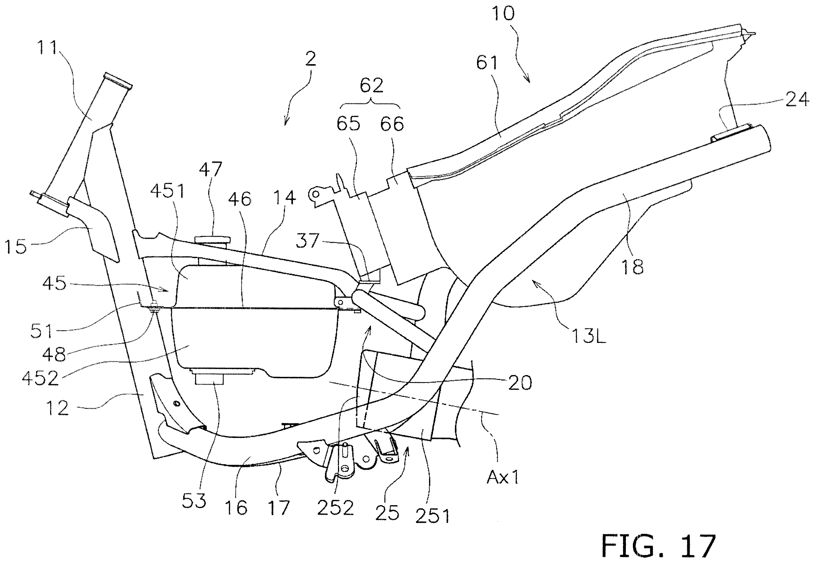

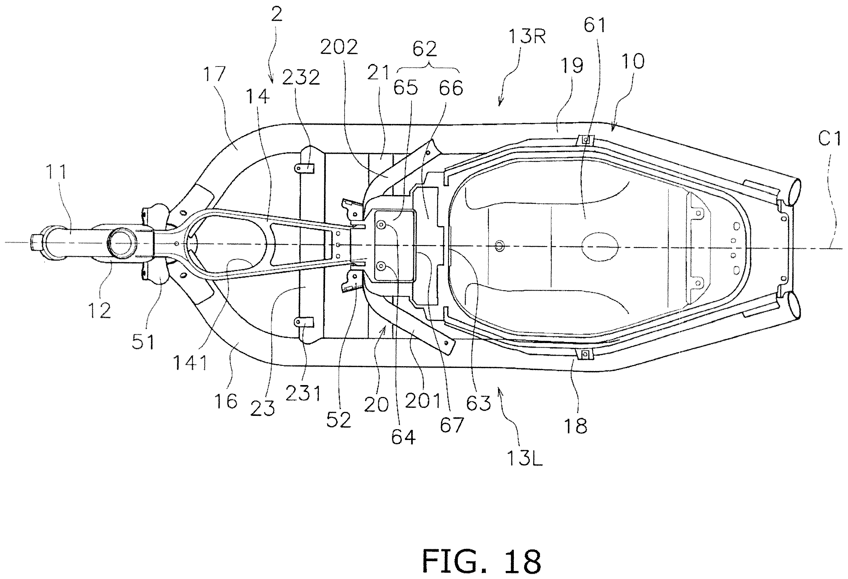

FIG. 17 is a side view of the vehicle body frame 2 according to another preferred embodiment. FIG. 18 is a top view of the vehicle body frame 2 according to this another preferred embodiment. As shown in FIGS. 17 and 18, the storage portion 10 may include a storage box 61 and a battery box 62. The storage box 61 accommodates stuffs such as a helmet. The battery box 62 accommodates a battery. The battery box 62 is disposed forward of the storage box 61. As shown in FIG. 18, the storage box 61 and the battery box 62 are divided by a first wall portion 63. The battery box 62 is disposed over the cylinder head cover 252. In other words, the battery box 62 overlaps with the cylinder head cover 252 in a top view.

It should be noted that the storage box 61 and the battery box 62 may be integrated. Alternatively, the storage box 61 and the battery box 62 may be provided separately from each other.

As shown in FIG. 18, the battery box 62 includes attachment portions 64. The attachment portions 64 are attached to the support bracket 37 by fixation members such as bolts. As shown in FIG. 17, the battery box 62 is supported by the coupling frame 20 through the support bracket 37. A rear portion of the storage box 61 is supported by the cross member 24.

The battery box 62 may include a battery storage portion 65 and an electric component storage portion 66. The battery storage portion 65 accommodates the battery. The electric component storage portion 66 accommodates electric components (a fuse, a relay, etc.) to be connected to the battery. The battery storage portion 65 and the electric component storage portion 66 are divided by a second wall portion 67. The electric component storage portion 66 is disposed rearward of the battery storage portion 65. The electric component storage portion 66 is disposed forward of the storage box 61. The electric component storage portion 66 and the storage box 61 are divided by the aforementioned first wall portion 63.

## Claims

1. A straddled vehicle, comprising:
a head pipe portion (11);
a down frame portion (12) downwardly extending from the head pipe portion (11);
a left side frame (13L) including a left lower frame portion (16) and a left rear frame portion (18), the left lower frame portion (16) extending rearward and laterally leftward in a vehicle width direction from a lower portion of the down frame portion (12), the left rear frame portion (18) extending rearward and upward from the left lower frame portion (16);
a right side frame (13R) including a right lower frame portion (17) and a right rear frame portion (19), the right lower frame portion (17) extending rearward and laterally rightward in the vehicle width direction from the lower portion of the down frame portion (12), the right rear frame portion (19) extending rearward and upward from the right lower frame portion (17);
a coupling frame (20) coupling the left side frame (13L) and the right side frame (13R);
a seat (4) for a rider, the seat (4) being supported by the left rear frame portion (18) and the right rear frame portion (19);
a storage portion (10) disposed under the seat (4);
a left foot rest (321) disposed in a lower position than the seat (4), at least portion of the left foot rest (321) being located forward of the seat (4), the left foot rest (321) being supported by the left lower frame portion (16);
a right foot rest (322) disposed in a lower position than the seat (4), at least portion of the right foot rest (322) being located forward of the seat (4), the right foot rest (322) being supported by the right lower frame portion (17);
a tunnel portion (33) protruding upward, the tunnel portion (33) being disposed between the left foot rest (321) and the right foot rest (322) in the vehicle width direction;
a fuel tank (35) disposed in the tunnel portion (33); and
an engine (25), at least portion of the engine (25) being disposed behind the fuel tank (35) and under the storage portion (10), the engine (25) including a cylinder (251) and a cylinder head cover (252), the cylinder head cover (252) being disposed in front of the cylinder (251), the cylinder head cover (252) being provided separately from the cylinder (251), wherein
a lower end of an upper edge of the tunnel portion (33) is disposed forward of the seat (4) and in a lower position than an upper edge of the seat (4),
at least a portion of the fuel tank (35) overlaps with the cylinder head cover (252) in a vehicle front view,
the coupling frame (20) is joined to the left side frame (13L) and the right side frame (13R) at positions located rearward of at least a portion of the cylinder head cover (252), **characterized in that** an upper end of the coupling frame (20) is disposed in a higher position than the cylinder head cover (252),
a dimension (W) of the fuel tank (35) in the vehicle width direction is smaller than a dimension (H) of the fuel tank (35) in a vehicle up-and-down direction and is smaller than a dimension (L) of the fuel tank (35) in a vehicle back-and-forth direction,
a lower edge of the fuel tank (35) is disposed in a higher position than the left lower frame portion (16), the right lower frame portion (17), and a lower end of the cylinder head cover (252),
a front portion of the fuel tank (35) is attached to the down frame portion (12), and
a rear portion of the fuel tank (35) is attached to the coupling frame (20) at a position closer to a vehicle center in the vehicle width direction than the left lower frame portion (16) and the right lower frame portion (17).

2. The straddled vehicle according to claim 1, wherein the down frame portion (12) extends downward and rearward, and
a front end of the fuel tank (35) is disposed forward of a rear end of the down frame portion (12).

3. The straddled vehicle according to claim 1 or 2, wherein the fuel tank (35) includes a front attachment portion (48) and a rear attachment portion (49), the front attachment portion (48) being attached to the down frame portion (12), the rear attachment portion (49) being attached to the coupling frame (20), and
the front attachment portion (48) and the rear attachment portion (49) are located between upper and lower ends of the fuel tank (35) in the vehicle up-and-down direction.

4. The straddled vehicle according to any of claims 1 to 3, wherein the fuel tank (35) includes a fuel tank body (45) and a flange portion (46), the fuel tank body (45) being configured to store a fuel, the flange portion (46) being disposed to surround the fuel tank body (45), and
the flange portion (46) is attached to the down frame portion (12) at a position forward of a front end of the fuel tank body (45) and is attached to the coupling frame (20) at a position rearward of a rear end of the fuel tank body (45).

5. The straddled vehicle according to any of claims 1 to 3, wherein the fuel tank (35) includes a fuel tank body (45) and a flange portion (46), the fuel tank body (45) being configured to store a fuel, the flange portion (46) being disposed to surround the fuel tank body (45), and
the flange portion (46) is located in a higher position than a line extending from an axis (Ax1) of the cylinder (251) in a vehicle side view.

6. The straddled vehicle according to claim 5, wherein the fuel tank body (45) includes an upper tank portion (451) and a lower tank portion (452), the upper tank portion (451) being located over the flange portion (46), the lower tank portion (452) being located under the flange portion (46), and
a dimension (Ha) of the upper tank portion (451) in the vehicle up-and-down direction is smaller than a dimension (Hb) of the lower tank portion (452) in the vehicle up-and-down direction.

7. The straddled vehicle according to claim 6, wherein a dimension of a rear surface of the upper tank portion (451) in the vehicle up-and-down direction is smaller than a dimension of a rear surface of the lower tank portion (452) in the vehicle up-and-down direction.

8. The straddled vehicle according to any of claims 4 to 7, wherein the flange portion (46) is located in a higher position than the cylinder head cover (252).

9. The straddled vehicle according to any of claims 4 to 8, wherein the front portion of the fuel tank (35) is attached to the down frame portion (12) at a position laterally inward of right and left outer ends of the fuel tank body (45).

10. The straddled vehicle according to any of claims 1 to 9, wherein the front portion of the fuel tank (35) is attached to the down frame portion (12) at a higher position than the cylinder head cover (252).

11. The straddled vehicle according to any of claims 1 to 10, wherein the engine (25) is suspended from the left side frame (13L) and the right side frame (13R) at a lower position than the axis (Ax1) of the cylinder (251).

12. The straddled vehicle according to any of claims 1 to 11, further comprising:
a coupling member (14) disposed over the fuel tank (35), wherein
a front portion of the coupling member (14) is connected to the down frame portion (12), and
a rear portion of the coupling member (14) is connected to the coupling frame (20).

13. The straddled vehicle according to claim 12, wherein in a vehicle plan view, the coupling member (14) is smaller than the fuel tank (35) in the vehicle width direction.

14. The straddled vehicle according to any of claims 1 to 13, further comprising:
a fuel pump (53) attached to a bottom surface of the fuel tank (35), wherein
in the vehicle side view, the fuel pump (53) is located forward of a middle portion of the bottom surface of the fuel tank (35) in the vehicle back-and-forth direction.

15. The straddled vehicle according to any of claims 1 to 14, wherein in the vehicle front view, a portion not overlapping with the fuel tank (35) in the cylinder head cover (252) has a larger area than a portion overlapping with the fuel tank (35) in the cylinder head cover (252).

16. The straddled vehicle according to any of claims 1 to 15, wherein the fuel tank (35) includes a filler (47) for fueling, the filler (47) being disposed on an upper surface of the tunnel portion (33).

17. The straddled vehicle according to any of claims 1 to 16, wherein the engine (25) includes
a first fixation member (41,42) for fixing the cylinder head cover (252) to the cylinder (251), and
a second fixation member (43,44) for fixing the cylinder head cover (252) to the cylinder (251), the second fixation member (43,44) being disposed in a lower position than the first fixation member (41,42), and
a lower end portion of the fuel tank (35) is located in a higher position than the second fixation member (43,44).

18. The straddled vehicle according to any of claims 1 to 17, wherein a front portion of the storage portion (10) is supported by the coupling frame (20).

## Patentansprüche

1. Ein Spreiz-Sitz-Fahrzeug, das umfasst:
einen Kopf-Rohr-Abschnitt (11);
einen Unter-Rahmen-Abschnitt (12), der sich nach unten von dem Kopf-Rohr-Abschnitt (11) erstreckt;
einen linken Seiten-Rahmen (13L), der einen linken unteren Rahmenabschnitt (16) und einen linken hinteren Rahmenabschnitt (18) beinhaltet, der linke untere Rahmenabschnitt (16) erstreckt sich nach hinten und lateral nach links in einer Fahrzeug-Breiten-Richtung von einem unteren Abschnitt des Unter-Rahmen-Abschnitts (12), der linke hintere Rahmenabschnitt (18) erstreckt sich nach hinten und nach oben von dem linken unteren Rahmenabschnitt (16);
einen rechten Seiten-Rahmen (13R), der einen rechten unteren Rahmenabschnitt (17) und einen rechten hinteren Rahmenabschnitt (19) beinhaltet, der rechte untere Rahmenabschnitt (17) erstreckt sich nach hinten und lateral nach rechts in der Fahrzeug-Breiten-Richtung von dem unteren Abschnitt des Unter-Rahmen-Abschnitts (12), der rechte hintere Rahmenabschnitt (19) erstreckt sich nach hinten und nach oben von dem rechten unteren Rahmenabschnitt (17);
einen Kopplungs-Rahmen (20), der den linken Seiten-Rahmen (13L) und den rechten Seiten-Rahmen (13R) koppelt;
einen Sitz (4) für einen Fahrer, der Sitz (4) ist durch den linken hinteren Rahmenabschnitt (18) und den rechten hinteren Rahmenabschnitt (19) gelagert;
einen Lagerabschnitt (10), der unter dem Sitz (4) positioniert ist;
eine linke Fußablage (321), die in einer niedrigeren Position als der Sitz (4) positioniert ist, zumindest ein Abschnitt von der linken Fußablage (321) ist vor dem Sitz (4) angeordnet, die linke Fußablage (321) ist durch den linken unteren Rahmenabschnitt (16) gelagert;
eine rechte Fußablage (322), die in einer niedrigeren Position als der Sitz (4) positioniert ist, zumindest ein Abschnitt der rechten Fußablage (322) ist vor dem Sitz (4) angeordnet, die rechte Fußablage (322) ist durch den rechten unteren Rahmenabschnitt (17) gelagert;
einen Tunnelabschnitt (33), der nach oben vorsteht, der Tunnelabschnitt (33) ist zwischen der linken Fußablage (321) und der rechten Fußablage (322) in der Fahrzeug-Breiten-Richtung gelagert;
einen Kraftstoff-Tank (35), der in dem Tunnelabschnitt (33) positioniert ist; und
einen Motor (25), zumindest ein Abschnitt des Motors (25), ist hinter dem Kraftstoff-Tank (35) und unter dem Lagerabschnitt (10) positioniert, der Motor (25) beinhaltet einen Zylinder (251) und eine Zylinder-Kopf-Abdeckung (252), die Zylinder-Kopf-Abdeckung (252) ist vor dem Zylinder (251) positioniert, die Zylinder-Kopf-Abdeckung (252) ist separat von dem Zylinder (251) vorgesehen, wobei
ein unteres Ende von einer oberen Kante von dem Tunnelabschnitt (33) vor dem Sitz (4) und in einer niedrigeren Position als eine obere Kante von dem Sitz (4) positioniert ist, zumindest ein Abschnitt des Kraftstoff-Tanks (35) überlappt mit der Zylinder-Kopf-Abdeckung (252) in einer Fahrzeug-Vorder-Ansicht,
der Kopplungs-Rahmen (20) ist mit dem linken Seiten-Rahmen (13L) und dem rechten Seiten-Rahmen (13R) an Positionen verbunden, die hinter von zumindest einem Abschnitt von der Zylinder-Kopf-Abdeckung (252) angeordnet sind, **dadurch gekennzeichnet, dass**
ein oberes Ende des Kopplungs-Rahmens (20) in einer höheren Position als die Zylinder-Kopf-Abdeckung (252) positioniert ist,
eine Abmessung (W) des Kraftstoff-Tanks (35) in der Fahrzeug-Breiten-Richtung ist kleiner als eine Abmessung (H) des Kraftstoff-Tanks (35) in einer Fahrzeug Oben-und-Unten-Richtung und kleiner als eine Abmessung (L) des Kraftstoff-Tanks (35) in einer Fahrzeug Rück-und-Vor-Richtung,
eine untere Kante des Kraftstoff-Tanks (35) ist in einer höheren Position als der linke untere Rahmenabschnitt (16), der rechte untere Rahmenabschnitt (17) und einem unteren Ende der Zylinder-Kopf-Abdeckung (252) positioniert,
ein vorderer Abschnitt des Kraftstoff-Tanks (35) ist an dem Unter-Rahmen-Abschnitt (12) angebracht, und
ein hinterer Abschnitt des Kraftstoff-Tanks (35) ist an dem Kopplungs-Rahmen an einer Position näher zu einer Fahrzeug-Mitte in der Fahrzeug-Breiten-Richtung angebracht als der linke untere Rahmenabschnitt (16) und der rechte untere Rahmenabschnitt (17).

2. Das Spreiz-Sitz-Fahrzeug gemäß Anspruch 1, wobei der Unter-Rahmen-Abschnitt (12) sich nach unten und hinten erstreckt, und
ein vorderes Ende des Kraftstoff-Tanks (35) ist vor einem hinteren Ende des Unter-Rahmen-Abschnitts (12) positioniert.

3. Das Spreiz-Sitz-Fahrzeug gemäß Anspruch 1 oder 2, wobei der Kraftstoff-Tank (35) einen vorderen Anbringungsabschnitt (48) und einen hinteren Anbringungsabschnitt (49) beinhaltet, der vordere Anbringungsabschnitt (49) ist an dem Unter-Rahmen-Abschnitt (12) angebracht, der hintere Anbringungsabschnitt (49) ist an dem Kopplungs-Rahmen (20) angebracht, und
der vordere Anbringungsabschnitt (48) und der hintere Anbringungsabschnitt (49) sind zwischen oberen und unteren Enden des Kraftstoff-Tanks (35) in der Fahrzeug Oben-und-Unten-Richtung angeordnet.

4. Das Spreiz-Sitz-Fahrzeug gemäß irgendeinem der Ansprüche 1 bis 3, wobei der Kraftstoff-Tank (35) einen Kraftstoff-Tank-Körper (45) und einen Flanschabschnitt (46) beinhaltet, der Kraftstoff-Tank-Körper (45) ist konfiguriert, um einen Kraftstoff zu lagern, der Flanschabschnitt (46) ist positioniert, um den Kraftstoff-Tank-Körper (45) zu umgeben, und
der Flanschabschnitt (46) ist an dem Unter-Rahmen-Abschnitt (12) an einer Position vor einem vorderen Ende von dem Kraftstoff-Tank-Körper (45) angebracht und ist an den Kopplungsabschnitt (20) an einer Position hinter einem hinteren Ende des Kraftstoff-Tank-Körpers (45) angebracht.

5. Das Spreiz-Sitz-Fahrzeug gemäß irgendeinem der Ansprüche 1 bis 3, wobei der Kraftstoff-Tank (35) einen Kraftstoff-Tank-Körper (45) und einen Flanschabschnitt (46) beinhaltet, der Kraftstoff-Tank-Körper (45) ist konfiguriert, um einen Kraftstoff zu lagern, der Flanschabschnitt (46) ist positioniert, um den Kraftstoff-Tank-Körper (45) zu umgeben, und
der Flanschabschnitt (46) ist an einer höheren Position als eine Linie, die sich von einer Achse (Ax1) des Zylinders (251) in einer Fahrzeug-Seiten-Ansicht erstreckt, angeordnet.

6. Das Spreiz-Sitz-Fahrzeug gemäß Anspruch 5, wobei der Kraftstoff-Tank-Körper (45) einen oberen Tankabschnitt (451) und einen unteren Tankabschnitt (452) beinhaltet, der obere Tankabschnitt (451) ist oberhalb des Flanschabschnitts (46) angeordnet, der untere Tankabschnitt (452) ist unterhalb des Flanschabschnitts (46) angeordnet, und eine Abmessung (Ha) des oberen Tankabschnitts (451) in der Fahrzeug-Oben-und-Unten-Richtung ist kleiner als eine Abmessung (Hb) des unteren Tankabschnitts (452) in der Fahrzeug-Oben-und-Unten-Richtung.

7. Das Spreiz-Sitz-Fahrzeug gemäß Anspruch 6, wobei eine Abmessung einer hinteren Fläche des oberen Tankabschnitts (451) in der Fahrzeug-Oben-und-Unten-Richtung kleiner ist als eine Abmessung einer hinteren Fläche des unteren Tankabschnitts (452) in der Fahrzeug-Oben-und-Unten-Richtung.

8. Das Spreiz-Sitz-Fahrzeug gemäß irgendeinem der Ansprüche 4 bis 7, wobei der Flanschabschnitt (46) in einer höheren Position als die Zylinder-Kopf-Abdeckung (252) angeordnet ist.

9. Das Spreiz-Sitz-Fahrzeug gemäß irgendeinem der Ansprüche 4 bis 8, wobei der vordere Abschnitt des Kraftstoff-Tanks (35) an dem Unter-Rahmen-Abschnitt (12) an einer Position angebracht ist, die lateral nach innen von rechten und linken äußeren Enden des Kraftstoff-Tank-Körpers (45) ist.

10. Das Spreiz-Sitz-Fahrzeug gemäß irgendeinem der Ansprüche 1 bis 9, wobei der vordere Abschnitt des Kraftstoff-Tanks (35) an dem Unter-Rahmen-Abschnitt (12) an einer Position angebracht ist, die höher als die Zylinder-Kopf-Abdeckung (252) ist.

11. Das Spreiz-Sitz-Fahrzeug gemäß irgendeinem der Ansprüche 1 bis 10, wobei der Motor (25) von dem linken Seiten-Rahmen (13L) und dem rechten Seiten-Rahmen (13R) an einer niedrigeren Position als die Achse (AX1) des Zylinders (251) gelagert ist.

12. Das Spreiz-Sitz-Fahrzeug gemäß irgendeinem der Ansprüche 1 bis 11, das weiter umfasst:
ein Kopplungs-Element (14), das über dem Kraftstoff-Tank (35) positioniert ist, wobei ein vorderer Abschnitt des Kopplungs-Elements (14) mit dem Unter-Rahmen-Abschnitt (12) verbunden ist, und
ein hinterer Abschnitt des Kopplungs-Elements (14) ist mit dem Kopplungs-Rahmen (20) verbunden.

13. Das Spreiz-Sitz-Fahrzeug gemäß Anspruch 12, wobei in einer Fahrzeugdraufsicht das Kopplungs-Element (14) kleiner als der Kraftstoff-Tank in der Fahrzeug-Breiten-Richtung ist.

14. Das Spreiz-Sitz-Fahrzeug gemäß irgendeinem der Ansprüche 1 bis 13, das weiter umfasst:
eine Kraftstoff-Pumpe (53), die an einer Bodenfläche des Kraftstoff-Tanks (35) angebracht ist, wobei
in der Fahrzeug-Seiten-Ansicht die Kraftstoff-Pumpe (53) vor einem Mittelabschnitt der Bodenfläche des Kraftstoff-Tanks (35) in der Fahrzeug-Rück-und-Vor-Richtung angeordnet ist.

15. Das Spreiz-Sitz-Fahrzeug gemäß irgendeinem der Ansprüche 1 bis 14, wobei in der Fahrzeug-Vorder-Ansicht ein Abschnitt, der nicht mit dem Kraftstoff-Tank (35) in der Zylinder-Kopf-Abdeckung (252) überlappt, einen größeren Bereich hat als ein Abschnitt, der mit dem Kraftstoff-Tank (35) in der Zylinder-Kopf-Abdeckung (252) überlappt.

16. Das Spreiz-Sitz-Fahrzeug gemäß irgendeinem der Ansprüche 1 bis 15, wobei der Kraftstoff-Tank (35) einen Filter für den Kraftstoff beinhaltet, der Filter ist an einer oberen Fläche des Tunnelabschnitts (38) positioniert.

17. Das Spreiz-Sitz-Fahrzeug gemäß irgendeinem der Ansprüche 1 bis 16, wobei der Motor (25) beinhaltet:
ein erstes Fixierungs-Element (41, 42), zum Fixieren der Zylinder-Kopf-Abdeckung (252) auf dem Zylinder (251), und
ein zweites Fixierungs-Element (43, 44), zum Fixieren der Zylinder-Kopf-Abdeckung (252) an den Zylinder (251), das zweite Fixierungs-Element (43, 44) ist in einer niedrigeren Position als das erste Fixierungs-Element (41, 42) positioniert, und
ein unterer Endabschnitt des Kraftstoff-Tanks (35) ist in einer höheren Position als das zweite Fixierungs-Element (43, 44) positioniert.

18. Das Spreiz-Sitz-Fahrzeug gemäß irgendeinem der Ansprüche 1 bis 14, wobei ein vorderer Abschnitt des Lagerabschnitts (10) durch den Kopplungs-Rahmen (20) gelagert ist.

## Revendications

1. Véhicule à enfourcher comprenant :
une portion de tube de tête (11) ;
une portion de châssis descendante (12) qui s'étend vers le bas depuis la portion de tube de tête (11) ;
un châssis côté gauche (13L) incluant une portion de châssis inférieure gauche (16) et une portion de châssis arrière gauche (18), la portion de châssis inférieure gauche (16) s'étendant vers l'arrière et latéralement vers la gauche en direction de la largeur du véhicule depuis une portion inférieure de la portion de châssis descendante (12), la portion de châssis arrière gauche (18) s'étendant vers l'arrière et vers le haut depuis la portion de châssis inférieure gauche (16) ;
un châssis côté droit (13R) incluant une portion de châssis inférieure droite (17) et une portion de châssis arrière droite (19), la portion de châssis inférieure droite (17) s'étendant vers l'arrière et latéralement vers la droite en direction de la largeur du véhicule depuis la portion inférieure de la portion de châssis descendante (12), la portion de châssis arrière droite (19) s'étendant vers l'arrière et vers le haut depuis la portion de châssis inférieure droite (17) ;
un châssis d'accouplement (20) qui accouple le châssis côté gauche (13L) au châssis côté droit (13R) ;
un siège (4) de conducteur, le siège (4) étant supporté par la portion de châssis arrière gauche (18) et la portion de châssis arrière droite (19) ;
une portion de stockage (10) disposée sous le siège (4) ;
un repose-pied gauche (321) disposé dans une position plus basse que le siège (4), au moins une portion du repose-pied gauche (321) étant positionnée en avant du siège (4), le repose-pied gauche (321) étant supporté par la portion de châssis inférieure gauche (16) ;
un repose-pied droit (322) disposé dans une position plus basse que le siège (4), au moins une portion du repose-pied droit (322) étant positionnée en avant du siège (4), le repose-pied droit (322) étant supporté par la portion de châssis inférieure droite (17) ;
une portion de tunnel (33) qui ressort vers le haut, la portion de tunnel (33) étant disposée entre le repose-pied gauche (321) et le repose-pied droit (322) en direction de la largeur du véhicule ;
un réservoir de carburant (35) disposé dans la portion de tunnel (33) ; et
un moteur (25), au moins une portion du moteur (25) étant disposée derrière le réservoir de carburant (35) et sous la portion de stockage (10), le moteur (25) incluant un cylindre (251) et un couvre-culasse (252), le couvre-culasse (252) étant disposé devant le cylindre (251), le couvre-culasse (252) étant pourvu séparément du cylindre (251), dans lequel
une extrémité inférieure d'un bord supérieur de la portion de tunnel (33) est disposée en avant du siège (4) et dans une position plus basse qu'un bord supérieur du siège (4),
au moins une portion du réservoir de carburant (35) chevauche le couvre-culasse (252) en vue de face du véhicule,
le châssis d'accouplement (20) est rattaché au châssis côté gauche (13L) et au châssis côté droit (13R) à des positions situées en arrière d'au moins une portion du couvre-culasse (252),
**caractérisé en ce que**
une extrémité supérieure du châssis d'accouplement (20) est disposée dans une position plus haute que le couvre-culasse (252),
une dimension (W) du réservoir de carburant (35) en direction de la largeur du véhicule est inférieure à une dimension (H) du réservoir de carburant (35) en direction haut-bas du véhicule et est inférieure à une dimension (L) du réservoir de carburant (35) en direction avant-arrière du véhicule,
un bord inférieur du réservoir de carburant (35) est disposé dans une position plus haute que la portion de châssis inférieure gauche (16), la portion de châssis inférieure droite (17) et une extrémité inférieure du couvre-culasse (252),
une portion avant du réservoir de carburant (35) est attachée à la portion de châssis descendante (12), et
une portion arrière du réservoir de carburant (35) est attachée au châssis d'accouplement (20) à une position plus proche du centre du véhicule en direction de la largeur du véhicule que la portion de châssis inférieure gauche (16) et la portion de châssis inférieure droite (17).

2. Véhicule à enfourcher selon la revendication 1, dans lequel la portion de châssis descendante (12) s'étend vers le bas et vers l'arrière, et
une extrémité avant du réservoir de carburant (35) est disposée à l'avant d'une extrémité arrière de la portion de châssis descendante (12).

3. Véhicule à enfourcher selon la revendication 1 ou 2, dans lequel le réservoir de carburant (35) comprend une portion d'attache avant (48) et une portion d'attache arrière (49), la portion d'attache avant (48) étant attachée à la portion de châssis descendante (12), la portion d'attache arrière (49) étant attachée au châssis d'accouplement (20), et
la portion d'attache avant (48) et la portion d'attache arrière (49) sont positionnées entre des extrémités supérieure et inférieure du réservoir de carburant (35) en direction haut-bas du véhicule.

4. Véhicule à enfourcher selon l'une quelconque des revendications 1 à 3, dans lequel le réservoir de carburant (35) comprend un corps de réservoir de carburant (45) et une portion de bride (46), le corps de réservoir de carburant (45) étant configuré pour stocker un carburant, la portion de bride (46) étant disposée pour entourer le corps de réservoir de carburant (45), et
la portion de bride (46) est attachée à la portion de châssis descendante (12) dans une position en avant d'une extrémité avant du corps de réservoir de carburant (45) et est attachée au châssis d'accouplement (20) dans une position en arrière d'une extrémité arrière du corps de réservoir de carburant (45).

5. Véhicule à enfourcher selon l'une quelconque des revendications 1 à 3, dans lequel le réservoir de carburant (35) comprend un corps de réservoir de carburant (45) et une portion de bride (46), le corps de réservoir de carburant (45) étant configuré pour stocker un carburant, la portion de bride (46) étant disposée pour entourer le corps de réservoir de carburant (45), et
la portion de bride (46) est agencée dans une position plus haute qu'une ligne qui s'étend depuis un axe (Ax1) du cylindre (251) en vue latérale du véhicule.

6. Véhicule à enfourcher selon la revendication 5, dans lequel le corps de réservoir de carburant (45) comprend une portion de réservoir supérieure (451) et une portion de réservoir inférieure (452), la portion de réservoir supérieure (451) étant située au-dessus de la portion de bride (46), la portion de réservoir inférieure (452) étant située au-dessous de la portion de bride (46), et
une dimension (Ha) de la portion de réservoir supérieure (451) en direction haut-bas du véhicule est inférieure à une dimension (Hb) de la portion de réservoir inférieure (452) en direction haut-bas du véhicule.

7. Véhicule à enfourcher selon la revendication 6, dans lequel une dimension de surface arrière de la portion de réservoir supérieure (451) en direction haut-bas du véhicule est inférieure à une dimension de surface arrière de la portion de réservoir inférieure (452) en direction haut-bas du véhicule.

8. Véhicule à enfourcher selon l'une quelconque des revendications 4 à 7, dans lequel la portion de bride (46) se trouve dans une position plus haute que le couvre-culasse (252).

9. Véhicule à enfourcher selon l'une quelconque des revendications 4 à 8, dans lequel la portion avant du réservoir de carburant (35) est attachée à la portion de châssis descendante (12) dans une position latéralement vers l'intérieur des extrémités externes droite et gauche du corps de réservoir de carburant (45).

10. Véhicule à enfourcher selon l'une quelconque des revendications 1 à 9, dans lequel la portion avant du réservoir de carburant (35) est attachée à la portion de châssis descendante (12) dans une position plus élevée que le couvre-culasse (252).

11. Véhicule à enfourcher selon l'une quelconque des revendications 1 à 10, dans lequel le moteur (25) est suspendu au châssis côté gauche (13L) et au châssis côté droit (13R) dans une position plus basse que l'axe (Ax1) du cylindre (251).

12. Véhicule à enfourcher selon l'une quelconque des revendications 1 à 11, comprenant en outre :
un élément d'accouplement (14) disposé au-dessus du réservoir de carburant (35), dans lequel
une portion avant de l'élément d'accouplement (14) est connectée à la portion de châssis descendante (12), et
une portion arrière de l'élément d'accouplement (14) est connectée au châssis d'accouplement (20).

13. Véhicule à enfourcher selon la revendication 12, dans lequel, dans une vue en plan du véhicule, l'élément d'accouplement (14) est plus petit que le réservoir de carburant (35) en direction de la largeur du véhicule.

14. Véhicule à enfourcher selon l'une quelconque des revendications 1 à 13, comprenant en outre :
une pompe à carburant (53) attachée à une surface de fond du réservoir de carburant (35), dans lequel
en vue latérale du véhicule, la pompe à carburant (53) se trouve à l'avant d'une portion médiane de la surface de fond du réservoir de carburant (35) en direction avant-arrière du véhicule.

15. Véhicule à enfourcher selon l'une quelconque des revendications 1 à 14, dans lequel, en vue de face du véhicule, une portion qui ne chevauche pas le réservoir de carburant (35) dans le couvre-culasse (252) présente une surface supérieure à une portion qui chevauche le réservoir de carburant (35) dans le couvre-culasse (252).

16. Véhicule à enfourcher selon l'une quelconque des revendications 1 à 15, dans lequel le réservoir de carburant (35) comprend un élément de remplissage (47) pour remplir le carburant, l'élément de remplissage (47) étant disposé sur une surface supérieure de la portion de tunnel (33) .

17. Véhicule à enfourcher selon l'une quelconque des revendications 1 à 16, dans lequel le moteur (25) comprend
un premier élément de fixation (41, 42) pour fixer le couvre-culasse (252) au cylindre (251), et
un deuxième élément de fixation (43, 44) pour fixer le couvre-culasse (252) au cylindre (251), le deuxième élément de fixation (43, 44) étant disposé dans une position plus basse que le premier élément de fixation (41, 42), et
une portion d'extrémité inférieure du réservoir de carburant (35) se trouve dans une position plus haute que le deuxième élément de fixation (43, 44).

18. Véhicule à enfourcher selon l'une quelconque des revendications 1 à 17, dans lequel une portion avant de la portion de stockage (10) est supportée par le châssis d'accouplement (20).
